# EUROPÄISCHE PATENTANMELDUNG

(11) **EP 4 080 686 A1**
(43) Veröffentlichungstag der Anmeldung: **26.10.2022**
(21) Anmeldenummer: 21169671.1
(22) Anmeldetag: 21.04.2021
(51) Int. Cl.: H01R 11/28, B60L 53/18, H01M 50/502, H01R 13/506, H01R 13/627, H02G 5/06

(54) **ELEKTRISCHER STECKVERBINDER, ELEKTRISCHES VERBINDUNGSELEMENT UND ELEKTRISCHE STECKVERBINDUNG**

(71) Anmelder: Rosenberger Hochfrequenztechnik GmbH & Co. KG, 83413 Fridolfing (DE)
(72) Erfinder: Hegenauer, Johannes, 83346 Bergen (DE); Jäkel, Thomas, 84524 Neuötting (DE); Blakborn, Willem, 83334 Inzell (DE); Gottanka, Johann, 84533 Marktl (DE)
(74) Vertreter: Lorenz, Markus

(57) **Zusammenfassung**

Die Erfindung betrifft einen elektrischen Steckverbinder (3) zur elektrischen Verbindung eines in den Steckverbinder (3) mündenden elektrischen Leiters (4) mit einem korrespondierenden elektrischen Gegensteckverbinder (6), aufweisend ein mit dem elektrischen Leiter (4) verbundenes Kontaktelement (10) und ein das Kontaktelement (10) zumindest teilweise umhüllendes Steckverbindergehäuse (15). Erfindungsgemäß ist vorgesehen, dass eine erste Gehäuseschale (16) des Steckverbindergehäuses (15) und eine zweite Gehäuseschale (17) des Steckverbindergehäuses (15) relativ zueinander bis in eine Verriegelungsposition verschiebbar sind, in der die beiden Gehäuseschalen (16, 17) verriegelt sind und in der zumindest eine der beiden Gehäuseschalen (16, 17) formschlüssig mit einem Gegensteckverbindergehäuse (22) eines Gegensteckverbinders (6) verriegelt ist.

## Beschreibung

Die Erfindung betrifft einen elektrischen Steckverbinder zur elektrischen Verbindung eines in den Steckverbinder mündenden elektrischen Leiters mit einem korrespondierenden elektrischen Gegensteckverbinder, gemäß dem Oberbegriff des Anspruchs 1.

Die Erfindung betrifft außerdem ein elektrisches Verbindungselement, aufweisend wenigstens einen elektrischen Steckverbinder und einen elektrischen Leiter.

Die Erfindung betrifft auch eine elektrische Steckverbindung, aufweisend einen Steckverbinder und einen Gegensteckverbinder.

Aus der Elektrotechnik sind verschiedene elektrische Steckverbinder bekannt. Elektrischen Steckverbinder dienen bekanntermaßen dazu, elektrische Versorgungssignale und/oder Datensignale an korrespondierende Gegensteckverbinder zu übertragen. Bei einem Steckverbinder bzw. Gegensteckverbinder kann es sich beispielsweise um einen Stecker, um einen Einbaustecker, um eine Buchse, um eine Kupplung oder um einen Adapter handeln. Die im Rahmen der Erfindung verwendete Bezeichnung "Steckverbinder" bzw. "Gegensteckverbinder" steht stellvertretend für alle Varianten.

Besondere Anforderungen an elektrische Steckverbinder werden insbesondere im Hochvoltbereich gestellt. Hochvoltsteckverbinder werden in der Fahrzeugtechnik vor allem bei Elektro- und/oder Hybridfahrzeugen eingesetzt, um eine Fahrzeugbatterie mit Ladestrom zu versorgen, um die gespeicherte Energie aus der Batterie zu entnehmen und dem elektrischen Antrieb zuzuführen oder um mehrere Batterien bzw. Batteriemodule untereinander zu verbinden. Die elektrische Steckverbindung muss dabei dauerhaft und sicher ein Eindringen von Feuchtigkeit und Verunreinigungen verhindern und eine einwandfreie Übertragung hoher Ströme gewährleisten.

Neben einer sicheren und vorzugsweise niederohmigen elektrischen Verbindung zwischen den Kontaktelementen des Steckverbinder und den Gegenkontaktelementen des Gegensteckverbinder kann im Hochvoltbereich außerdem ein Berührschutz leitfähiger Komponenten von Bedeutung sein. Ein Berührschutz sollte dabei in erster Linie sicher sein. Er muss aufgrund der Massentauglichkeit der Steckverbindung aber auch einfach und kostengünstig herstellbar sein.

Außerdem sollte die Steckverbindung, insbesondere eine Hochvoltsteckverbindung oder eine Steckverbindung zur Übertragung von sicherheitsrelevanten Steuersignalen, mechanisch robust und gegen ein unbeabsichtigtes Öffnen verlässlich gesichert sein. Besonders sichere Verbindungen können beispielsweise durch eine Verschraubung zwischen Steckverbinder und Gegensteckverbinder bereitgestellt werden. Gleichwohl ist ein Toleranzausgleich bzw. die Kompensation eines Versatzes zwischen Steckverbinder und Gegensteckverbinder bei einer Schraubverbindung nur in sehr begrenztem Ausmaß möglich.

Ein steckbarer Modulverbinder zur Herstellung einer elektrischen Verbindung zwischen Batteriemodulen mit der Möglichkeit eines gewissen Versatzausgleichs wird beispielsweise in der DE 10 2018 114 764 B4 vorgeschlagen. Zur Verbindung der Batteriemodule wird eine Stromschiene seitlich an die Pole der Batteriemodule angelegt und mittels Halteklammern an den Polen fixiert. Auf diese Weise ist zumindest teilweise ein Toleranzausgleich möglich. Die vorgeschlagene Anordnung ist gleichzeitig aber aufwändig in der Montage und nur bedingt mit einem ausreichend sicheren Berührschutz ausstattbar. Auch die lediglich kraftschlüssige Sicherung der Steckverbindung in ihrem verbundenen Zustand ist nicht optimal, insbesondere nicht unter widrigen Umgebungsbedingungen.

In Anbetracht des bekannten Stands der Technik besteht die Aufgabe der vorliegenden Erfindung darin, einen elektrischen Steckverbinder bereitzustellen, der besonders sicher mit dem Gegensteckverbinder verrastbar ist und vorzugsweise dennoch eine versatzausgleichende Kontaktierung und die Verwendung eines Berührschutzes ermöglicht.

Der vorliegenden Erfindung liegt auch die Aufgabe zugrunde, ein elektrisches Verbindungselement mit wenigstens einem Steckverbinder bereitzustellen, der besonders sicher mit dem Gegensteckverbinder verrastbar ist und vorzugsweise dennoch eine versatzausgleichende Kontaktierung und die Verwendung eines Berührschutzes ermöglicht.

Außerdem ist es Aufgabe der Erfindung, eine elektrische Steckverbindung bereitzustellen, die besonders sicher verrastbar ist und vorzugsweise dennoch eine versatzausgleichende Kontaktierung und die Verwendung eines Berührschutzes ermöglicht.

Die Aufgabe wird für den elektrischen Steckverbinder mit den in Anspruch 1 aufgeführten Merkmalen gelöst. Hinsichtlich des elektrischen Verbindungselements wird die Aufgabe durch die Merkmale des Anspruchs 13 und für die elektrische Steckverbindung durch Anspruch 14 gelöst.

Die abhängigen Ansprüche und die nachfolgend beschriebenen Merkmale betreffen vorteilhafte Ausführungsformen und Varianten der Erfindung.

Es ist ein elektrischer Steckverbinder, vorzugsweise ein Hochvoltsteckverbinder, zur elektrischen Verbindung eines in den Steckverbinder mündenden elektrischen Leiters mit einem korrespondierenden elektrischen Gegensteckverbinder vorgesehen.

Der elektrische Leiter kann als Draht, Litze (also als Verbund mehrerer Einzeldrähte), Band oder Schiene ausgebildet sein. Vorzugsweise ist der elektrische Leiter ein längliches Bauteil.

Erfindungsgemäß weist der Steckverbinder ein mit dem elektrischen Leiter verbundenes Kontaktelement und ein das Kontaktelement zumindest teilweise umhüllendes Steckverbindergehäuse auf.

Der elektrische Leiter und das Kontaktelement können grundsätzlich aus einem beliebigen Material ausgebildet sein, mit dem eine niederohmig leitende Verbindung bereitstellbar ist. Der elektrische Leiter und/oder das Kontaktelement kann vorzugsweise aus einem Metall ausgebildet sein, beispielsweise aus Kupfer, Aluminium und/oder Silber.

Der elektrische Steckverbinder weist vorzugsweise genau ein Kontaktelement auf. Grundsätzlich kann der elektrische Steckverbinder allerdings eine beliebige Anzahl Kontaktelemente aufweisen, beispielsweise zwei Kontaktelemente, gegebenenfalls aber auch mehr als zwei Kontaktelemente, beispielsweise drei, vier, fünf, sechs, sieben, acht oder noch mehr Kontaktelemente mit jeweils identischem oder verschiedenem Aufbau. Insofern mehrere Kontaktelemente vorgesehen sind, sind diese vorzugsweise mit einem jeweiligen, in den Steckverbinder mündenden elektrischen Leiter verbunden (es können also auch mehrere elektrische Leiter in den Steckverbinder münden). Vorzugsweise sind die mehreren Kontaktelemente voneinander beabstandet bzw. elektrisch voneinander isoliert.

Der Leiterquerschnitt des elektrischen Leiters und/oder der Querschnitt des Kontaktelements können beispielsweise bis zu 10 mm², vorzugsweise bis zu 30 mm², besonders bevorzugt bis zu 60 mm², noch weiter bevorzugt bis zu 90 mm², beispielsweise auch bis zu 120 mm² oder mehr betragen. Insbesondere kann ein Leiterquerschnitt bzw. Querschnitt vorgesehen sein, der sich für eine elektrische Energieübertragung in der Hochvolttechnik eignet, also zur Übertragung hoher elektrischer Ströme (beispielsweise 100 A bis 700 A) bei Wechselspannungen von 30 V bis 1 kV oder mehr oder Gleichspannungen von 60 V bis 2,0 kV oder mehr, insbesondere in der Fahrzeugtechnik.

Das Steckverbindergehäuse ist mehrteilig ausgebildet. Grundsätzlich kann das Steckverbindergehäuse eine beliebige Anzahl Gehäusekomponenten aufweisen, also beispielsweise auch mehr Gehäusekomponenten als die nachfolgend noch genannte erste Gehäuseschale und zweite Gehäuseschale. Erfindungsgemäß weist das Steckverbindergehäuse zumindest eine erste Gehäuseschale und eine zweite Gehäuseschale auf.

Das Kontaktelement ist vorzugsweise zwischen den beiden Gehäuseschalen aufgenommen. Bei der ersten Gehäuseschale handelt es sich vorzugsweise um eine Oberschale, die im Wesentlichen auf einer von dem Gegensteckverbinder abgewandten Seite des Kontaktelements angeordnet ist, wenn die Steckverbindung geschlossen ist. Bei der zweiten Gehäuseschale handelt es sich vorzugsweise um eine Unterschale, die im Wesentlichen auf einer dem Gegensteckverbinder zugewandten Seite des Kontaktelements angeordnet ist, wenn die Steckverbindung geschlossen ist.

Durch Verwendung eines mehrteiligen Steckverbindergehäuses kann der Berührschutz verbessert sein. Ferner können sich vorteilhafte, benutzerfreundliche Montagemöglichkeiten ergeben.

Es kann optional auch vorgesehen sein, dass das Gegensteckverbindergehäuse mehrteilig ausgebildet ist. Grundsätzlich kann das Gegensteckverbindergehäuse aber auch nur einteilig ausgebildet sein, hierauf kommt es im Rahmen der Erfindung nicht unbedingt an.

Erfindungsgemäß sind die erste Gehäuseschale und die zweite Gehäuseschale relativ zueinander bis in eine Verriegelungsposition verschiebbar, in der die beiden Gehäuseschalen verriegelt sind und in der zumindest eine der beiden Gehäuseschalen formschlüssig mit einem Gegensteckverbindergehäuse eines Gegensteckverbinders verriegelt ist.

Die vorstehend genannte Verschiebung kann insbesondere durch eine Relativbewegung zwischen Kontaktelement und Steckverbindergehäuse (erste Gehäuseschale und/oder zweite Gehäuseschale), vorzugsweise zwischen Kontaktelement und erster Gehäuseschale, ausgeführt werden. Es kommt somit nicht darauf an, ob das Kontaktelement oder das Steckverbindergehäuse bzw. die erste/zweite Gehäuseschale - oder gegebenenfalls mehrere der genannten Steckverbinderkomponenten - verschoben werden. Der Grundsatz der relativen Bewegung gilt auch für alle nachfolgend beschriebenen Bewegungen und für alle an einer solchen Bewegung beteiligten Komponenten (also beispielsweise auch für die Verbindung zwischen Steckverbinder und Gegensteckverbinder).

Es hat sich herausgestellt, dass sich eine formschlüssige Verriegelung zwischen Steckverbindergehäuse und Gegensteckverbindergehäuse besonders vorteilhaft mit einem Berührschutz und einer versatzausgleichenden Kontaktierung zwischen Steckverbinder und Gegensteckverbinder kombinieren lässt und gleichzeitig die Möglichkeit einer besonders robusten und sicher geschlossenen Steckverbindung gewährleistet. Die vorgeschlagene formschlüssige Verriegelung hat sich damit als vorteilhafte Alternative einer Schraub- und/oder Klemmverriegelung einer Hochvoltsteckverbindung herausgestellt.

Um die formschlüssige Verriegelung prozesssicher und benutzerfreundlich herzustellen, ist eine Verschiebung der ersten Gehäuseschale des Steckverbindergehäuses relativ zu dem Kontaktelement, bis die erste Gehäuseschale eine entsprechende Verriegelungsposition erreicht, besonders vorteilhaft. Es kann aber auch die zweite Gehäuseschale entsprechend verschiebbar sein.

Vorzugsweise, aber nicht notwendigerweise, erfolgt auch die Verriegelung zwischen der ersten Gehäuseschale und der zweiten Gehäuseschale durch einen Formschluss.

In einer besonders vorteilhaften Ausgestaltung der Erfindung kann vorgesehen sein, dass das Kontaktelement des Steckverbinders eine Kontaktfläche aufweist und ausgebildet ist, um mit der Kontaktfläche eine Stirnfläche eines Gegenkontaktelements des Gegensteckverbinders zu kontaktieren.

Bei der Kontaktfläche und/oder bei der Stirnfläche kann es sich jeweils um eine vollständig zusammenhängende Fläche handeln. Die Kontaktfläche bzw. Stirnfläche kann gegebenenfalls aber auch mehrere Einzelflächen umfassen, die auf dem Kontaktelement bzw. auf dem Gegenkontaktelement verteilt angeordnet sind. So kann einer oder können mehrere Abschnitte des Kontaktelement bzw. des Gegenkontaktelements als Kontaktfläche bzw. Stirnfläche verwendbar sein.

Durch die vorgeschlagene Kontaktierung der Stirnfläche bzw. Stirnseite des Gegenkontaktelements ist ein Versatzausgleich in zumindest zwei Raumrichtungen bzw. in zumindest zwei Translationsfreiheitsgraden möglich, insbesondere in Kombination mit der vorgeschlagenen formschlüssigen Verriegelung. Gleichzeitig kann aufgrund der flächigen Kontaktierung der Stirnfläche des Gegenkontaktelements eine große Fläche für die Stromübertragung bereitgestellt werden. Die elektrische Verbindung zwischen Kontaktfläche des Steckverbinders und Stirnfläche des Gegensteckverbinders kann außerdem mit technisch besonders einfachen Mitteln mit einem geeigneten Kontaktdruck beaufschlagt werden (optional), um eine besonders robuste Kontaktierung zu ermöglichen. Auch ist das Ausstatten der Steckverbindung mit einem umfassenden Berührschutz (optional) bei einer stirnseitigen Kontaktierung vergleichsweise einfach möglich.

In einer vorteilhaften Weiterbildung der Erfindung kann vorgesehen sein, dass das Kontaktelement als ein mit dem elektrischen Leiter einteiliger Kontaktbereich ausgebildet ist.

Vorzugsweise ist der Kontaktbereich an einem Endabschnitt des elektrischen Leiters angeordnet.

Der elektrische Leiter kann zur Ausbildung des Kontaktbereichs entsprechend bearbeitet, beispielsweise verformt sein. Auch eine spanende Bearbeitung, beispielsweise zum Einbringen einer oder mehrerer Ausnehmungen, kann vorgesehen sein. Der elektrische Leiter und der Kontaktbereich können beispielsweise als einteiliges Stanz-Biege-Teil oder als Gussteil hergestellt sein.

Durch die vorgeschlagene Einteiligkeit kann ein zusätzliches Bauteil zur Ausgestaltung des Kontaktelements entfallen. Durch die Einteiligkeit kann insbesondere sichergestellt sein, dass der Kontaktbereich nicht zerstörungsfrei von dem elektrischen Leiter entfernbar ist. Die Verbindung zwischen dem Kontaktbereich und dem elektrischen Leiter kann dabei besonders robust sein. Die Verbindung kann in diesem Fall außerdem sehr niederohmig und in Folge zur Übertragung besonders hoher Ströme geeignet sein.

Vorzugsweise ist der Kontaktbereich aus einem plattenförmigen Endabschnitt des elektrischen Leiters ausgeformt. Der plattenförmige Endabschnitt, der den Kontaktbereich ausbildet, kann eine vollständig geschlossene Fläche aufweisen, beispielsweise eine ebene oder eine gewölbte Fläche. Der plattenförmige Endabschnitt kann allerdings auch eine oder mehrere Ausnehmungen (insbesondere Durchführungen, Rücksprünge und/oder Nuten) und/oder Erhebungen (insbesondere Stege, Nasen und/oder Stifte) aufweisen.

Im Rahmen der Erfindung ist eine Einteiligkeit zwischen dem Kontaktelement des Steckverbinders und dem elektrischen Leiter allerdings nicht zwingend erforderlich. Das Kontaktelement kann demnach grundsätzlich durch beliebige Verbindungstechniken kraftschlüssig, formschlüssig und/oder stoffschlüssig mit dem elektrischen Leiter verbunden sein. Entsprechende Kontaktelemente und Verbindungstechniken sind hinreichend bekannt. Insofern sich nachfolgend beschriebene Merkmale bzw. Varianten der Erfindung auf einen "Kontaktbereich" beziehen, so ist dies nicht einschränkend zu verstehen. Die sich auf einen Kontaktbereich beziehenden Merkmale können sich auch vorteilhaft für ein Kontaktelement eignen, das nicht mit dem elektrischen Leiter einteilig ausgebildet ist - und umgekehrt.

Vorzugsweise weist der Kontaktbereich bzw. das Kontaktelement zumindest zwei sich parallel zu der Längsachse bzw. entlang der Längsachse des elektrischen Leiters erstreckende Kontaktschenkel auf, die auf ihrer dem Gegenkontaktelement zugewandten Schenkelfläche jeweils einen Teil der Kontaktfläche ausbilden, um das Gegenkontaktelement jeweils zu kontaktieren.

Die Kontaktschenkel können im Bereich des Endes des elektrischen Leiters jeweils freie Enden aufweisen. Die Kontaktschenkel sind im Bereich des Endes des elektrischen Leiters vorzugsweise allerdings miteinander verbunden. Die Kontaktschenkel können insbesondere durch zwischen jeweils zwei Kontaktschenkeln angeordnete Ausnehmungen des elektrischen Leiters ausgebildet sein.

Die Aufteilung der Kontaktfläche auf mehrere Kontaktschenkel kann von Vorteil sein, da hierdurch eine hohe Stromübertragung durch eine insgesamte große Kontaktfläche ermöglicht wird, wobei gleichzeitig ein besonders guter Berührschutz mit dem Kontaktelement kombiniert werden kann, insbesondere wenn eines oder wenn mehrere Berührschutzelemente zwischen jeweiligen Kontaktschenkeln durch die entsprechende Ausnehmung hindurchgeführt werden.

Grundsätzlich können auch mehr als zwei Kontaktschenkel vorgesehen sein, beispielsweise drei Kontaktschenkel, vier Kontaktschenkel, fünf Kontaktschenkel oder noch mehr Kontaktschenkel, insbesondere ausgebildet durch jeweilige Ausnehmungen zwischen benachbarten Kontaktschenkeln. Bei Verwendung von mehr als zwei Kontaktschenkeln kann sich eine kammartige bzw. längsgitterartige Struktur ergeben.

Gemäß einer Ausgestaltung der Erfindung kann vorgesehen sein, dass das Kontaktelement einen Rücksprung ausbildet, um das Gegenkontaktelement innerhalb des Rücksprungs zu kontaktieren. Durch die Kontaktierung des Gegenkontaktelements in dem Rücksprung des Kontaktelements kann ein optionaler, zusätzlicher Formschluss zwischen Kontaktelement und Gegenkontaktelement bereitgestellt werden. Außerdem kann sich eine Führungsmöglichkeit ergeben, die es einem Monteur erleichtert, die Steckverbindung zu schließen. Alternativ oder zusätzlich können auch Erhebungen bzw. Vorsprünge vorgesehen sein. Auch das Gegenkontaktelement kann einen entsprechenden Rücksprung und/oder eine entsprechende Erhebung aufweisen.

Vorzugsweise ist an jedem der Kontaktschenkel ein Rücksprung vorgesehen, angrenzend an eine zwischen den Kontaktschenkeln vorgesehene Ausnehmung in dem elektrischen Leiter (insbesondere in der Art einer Stufe). Beispielsweise kann die zwischen den Kontaktschenkeln verlaufende Ausnehmung des elektrischen Leiters stufig ausgebildet sein bzw. an jedem Kontaktschenkel eine Stufe aufweisen, auf der das Gegenkontaktelement mit dem Zweck der Kontaktierung aufzuliegen vermag. Vorzugsweise erstreckt sich der Rücksprung an dem jeweiligen Kontaktschenkel parallel zu der Längsachse des Kontaktschenkels. Grundsätzlich kann sich der Rücksprung allerdings auch orthogonal zu der Längsachse oder sogar schräg hierzu erstrecken.

In einer vorteilhaften Weiterbildung der Erfindung kann vorgesehen sein, dass die erste Gehäuseschale ein erstes Rastelement und die zweite Gehäuseschale ein zweites Rastelement aufweist, die jeweils angeordnet und ausgebildet sind, um bei Erreichen eines Vormontagezustands derart miteinander zu verrasten, dass eine Bewegung der zweiten Gehäuseschale relativ zu der ersten Gehäuseschale nur noch zwischen dem Vormontagezustand und der Verriegelungsposition freigegeben ist. Die Bewegung der zweiten Gehäuseschale entgegen der Montagerichtung aus dem Vormontagezustand heraus kann vorzugsweise blockiert sein.

Auf diese Weise kann eine Verliersicherung der beiden Gehäuseschalen relativ zueinander bereitgestellt werden.

Optional können mehrere Rastelementpaare aus jeweiligen ersten und zweiten Rastelementen vorgesehen sein.

Bei dem ersten Rastelement kann es sich beispielsweise um einen Rastanschlag / eine Rastnut und bei dem zweiten Rastelement um einen elastischen Rastarm / einen Rasthaken handeln - oder umgekehrt. Die Rastnut und der Rastarm können sich in Montagerichtung erstrecken. Der Rastanschlag kann sich in Montagerichtung im Verschiebeweg des Rastarms befinden. Nach dem Verrasten des Rastarms in der Rastnut oder hinter dem Rastelement kann eine weitere Verschiebung des Rastarms ermöglicht werden, zumindest bis die Verriegelungsposition erreicht ist.

Gemäß einer Weiterbildung der Erfindung kann vorgesehen sein, dass die erste Gehäuseschale auf ihrer Innenseite ein Anschlagelement ausbildet, das sich in dem Vormontagezustand der ersten Gehäuseschale bis in eine in dem Kontaktelement gebildete Ausnehmung erstreckt (insbesondere in die zwischen zwei Kontaktschenkeln ausgebildete Ausnehmung), um die Verschiebbarkeit der ersten Gehäuseschale entlang des Kontaktelements einzuschränken.

Vorzugsweise ist das Anschlagelement stegförmig bzw. plattenförmig oder zylinderförmig ausgebildet. Grundsätzlich können auch mehrere Anschlagelemente vorgesehen sein. Dadurch, dass sich das Anschlagelement bis in die Ausnehmung des Kontaktelements hineinerstreckt, kann die Verschiebbarkeit der ersten Gehäuseschale relativ zu dem Kontaktelement in Längsrichtung und/oder Querrichtung in Abhängigkeit der Maße der Ausnehmung und des Anschlagelements beschränkt sein, da das Anschlagelement durch Anschlagen an einer Innenwandung der Ausnehmung die Bewegbarkeit der ersten Gehäuseschale einschränkt. In Kombination mit der Verrastung der beiden Gehäuseschalen in dem Vormontagezustand (durch die beiden Rastelemente), kann eine Verliersicherung zwischen den Gehäuseschalen und dem Kontaktelement bereitgestellt werden, da die Gehäuseschalen relativ zueinander, entgegen der Montagerichtung, gesichert sind und die erste Gehäuseschale außerdem durch das Anschlagelement in dem Kontaktelement gesichert ist.

Auch eine komplementäre Ausgestaltung ist gegebenenfalls möglich, wonach das Kontaktelement das Anschlagelement ausbildet, um die Verschiebbarkeit der ersten Gehäuseschale entlang des Kontaktelements einzuschränken.

Gemäß einer bevorzugten Weiterbildung der Erfindung kann vorgesehen sein, dass die beiden Gehäuseschalen in Längsrichtung bzw. parallel zu der Längsachse des Kontaktelements relativ zueinander in die Verriegelungsposition verschiebbar sind.

Es kann aber grundsätzlich vorgesehen sein, dass die beiden Gehäuseschalen parallel zu der Kontaktfläche des Kontaktelements / entlang des Kontaktelements beliebig relativ zueinander in die Verriegelungsposition verschiebbar sind, beispielsweise kann also vorgesehen sein, dass die beiden Gehäuseschalen in einer ersten Querrichtung, also orthogonal zu der Längsachse des Kontaktelements, parallel zu dem Kontaktelement, relativ zueinander in die Verriegelungsposition verschiebbar sind.

Insbesondere wenn die Gehäuseschalen parallel zu der Kontaktfläche verschiebbar sind (also beispielsweise in Längsrichtung oder Querrichtung des Kontaktelements) kann vorgesehen sein, dass zumindest eine der Gehäuseschalen (insbesondere die erste Gehäuseschale) auf dem Kontaktelement bzw. auf dem elektrischen Leiter aufliegend verschiebbar ist.

In einer weiteren Ausgestaltung der Erfindung kann sogar vorgesehen sein, dass die beiden Gehäuseschalen in Steckrichtung des Steckverbinders, entlang einer zweiten Querrichtung (insbesondere orthogonal zu der Längsrichtung), oder entgegen der Steckrichtung des Steckverbinders in die Verriegelungsposition verschiebbar sind.

Vorzugsweise verlaufen die Längsrichtung, die erste Querrichtung und die zweite Querrichtung jeweils zueinander orthogonal.

Vorzugsweise sind die Gehäuseschalen in einer linearen, geraden Bewegung ausgehend von einer Vorrastposition in die Verriegelungsposition relativ zueinander verschiebbar. Das Kontaktelement und/oder der elektrische Leiter können für die Verschiebung der ersten Gehäuseschale optional eine Führung oder zumindest eine Teilführung darstellen, was den Aufbau des Steckverbinders ganz besonders vereinfacht, insbesondere wenn das Kontaktelement als einteiliger Kontaktbereich an dem elektrischen Leiter ausgebildet ist. Auch die Gehäuseschalen können eine gegenseitige Führung aufweisen, insbesondere um eine geführte Linearverschiebung relativ zueinander zu ermöglichen.

In einer Ausgestaltung der Erfindung kann vorgesehen sein, dass das Steckverbindergehäuse aus einem elektrisch isolierenden Material ausgebildet ist. Auch das Gegensteckverbindergehäuse kann aus einem elektrisch isolierenden Material ausgebildet sein.

Bei dem Steckverbindergehäuse und/oder Gegensteckverbindergehäuse kann es sich insbesondere um ein Kunststoffgehäuse handeln, vorzugsweise aus einem steifen Kunststoff bzw. aus Hartplastik. Das Steckverbindergehäuse und/oder Gegensteckverbindergehäuse kann vorzugsweise mittels eines Spritzgussverfahrens oder eines Tiefziehverfahrens hergestellt werden.

Das Steckverbindergehäuse bzw. das Gegensteckverbindergehäuse kann ausgebildet sein, um einen Berührschutz für die leitfähigen Komponenten des Steckverbinders bzw. des Gegensteckverbinders bereitzustellen, insbesondere einen Berührschutz für den elektrischen Leiter, das Kontaktelement und/oder das Gegenkontaktelement. Bei dem Berührschutz kann es sich im Rahmen des erfinderischen Gesamtkonzepts auch um eine separate Erfindung handeln, die mit dem Steckverbinder, dem Gegensteckverbinder, dem Verbindungselement und der Steckverbindung in besonderer Beziehung und Wechselwirkung steht. Auf den Berührschutz im Rahmen dieser oder der separaten Erfindung wird nachfolgend noch näher eingegangen.

Für die formschlüssige Verriegelung der Steckverbindung und/oder der Gehäuseschalen miteinander können das Steckverbindergehäuse und das Gegensteckverbindergehäuse grundsätzlich beliebige Verbindungsmittel und Verbindungspaare aufweisen (z. B. Rastnasen, Rastnuten, Vorsprünge, Stege, Schultern, Rücksprünge, Kulissen, Kulissensteine, Nuten oder Führungsschienen), von denen nachfolgend einige noch beispielhaft beschrieben werden.

In dem Vormontagezustand ist das Kontaktelement zwischen den beiden Gehäuseschalen vorzugsweise derart aufgenommen, dass die Kontaktfläche des Kontaktelements für die Kontaktierung mit der Stirnfläche des Gegenkontaktelements des Gegensteckverbinders zugänglich ist.

In einer Weiterbildung der Erfindung kann vorgesehen sein, dass die zweite Gehäuseschale relativ zu der ersten Gehäuseschale in einer Montagerichtung entlang einer zwischen der ersten Gehäuseschale und der zweiten Gehäuseschale gebildeten Führung ausgehend von einem unmontierten Zustand bis in einen Vormontagezustand verschiebbar ist. Die Führung kann ergänzend oder alternativ auch zwischen der zweiten Gehäuseschale und dem Kontaktelement und/oder dem elektrischen Leiter bereitgestellt werden.

Vorzugsweise ist eine Linearführung vorgesehen, es kann aber beispielsweise auch eine zweidimensionale Führung vorgesehen sein, wie eine flächige Führung oder eine Führung mit kurvigem Verlauf. Insofern nachfolgend konkret auf eine "Linearführung" Bezug genommen wird, so ist dies nur beispielhaft zu verstehen - die entsprechenden Merkmale können sich im Zweifel auch in Kombination mit einer sonstigen Führung eignen.

Bereits auf diese Weise kann das Steckverbindergehäuse bzw. die erste Gehäuseschale und die zweite Gehäuseschale in dem Vormontagezustand im Wesentlichen verliersicher mit dem Kontaktelement verbunden sein, insbesondere wenn eine der Gehäuseschalen ein Anschlagelement aufweist, das sich in die Ausnehmung des Kontaktelements erstreckt. Eine noch bessere Verliersicherung kann gegeben sein, wenn die beiden Gehäuseschalen außerdem in dem Vormontagezustand miteinander verrasten, wie vorstehend bereits beschrieben. Die beiden Rastelemente können vorzugsweise als Komponenten in der Linearführung ausgebildet sein. Die Rastnut kann beispielsweise innerhalb einer Führungsnut der Linearführung (zum Beispiel der nachfolgend noch näher beschriebenen Seitenführung) einer der beiden Gehäuseschalen ausgebildet sein, wobei der Rastarm auf einer korrespondierenden Außenfläche eines innerhalb der Führungsnut geführten Führungselements der Linearführung der anderen Gehäuseschale ausgebildet ist.

Beispielsweise kann vorgesehen sein, dass die erste Gehäuseschale eine Seitenführung bereitstellt und die zweite Gehäuseschale in dem Vormontagezustand hierzu seitlich klammerartig umgreift (oder umgekehrt) oder dass die beiden Gehäuseschalen auf sonstige Weise ineinanderschiebbar sind und damit gleichzeitig die Linearführung ausbilden. Die Linearführung ist vorzugsweise im Wesentlichen spielfrei ausgebildet.

Vorzugsweise wird in dem Vormontagezustand eine Bewegung des Steckverbindergehäuses in Steckrichtung oder entgegen der Steckrichtung eingeschränkt und optional eine Bewegung des Steckverbindergehäuses bzw. der beiden Gehäuseschalen in Längsrichtung und Querrichtung des Kontaktelements bzw. des elektrischen Leiters zumindest eingeschränkt. Es kann optional eine Verrastung zwischen den beiden Gehäuseschalen bereits in dem Vormontagezustand vorgesehen sein (beispielsweise durch die vorstehend genannten Rastelemente). Ergänzend kann eine Steckverhinderung vorgesehen sein, die die Beweglichkeit der Gehäuseschalen relativ zueinander blockiert, bis die Steckverhinderung von dem Gegensteckverbindergehäuse des Gegensteckverbinders freigegeben wird (beispielsweise von dem nachfolgend noch beschriebenen Freigabekörper des Gegensteckverbindergehäuses).

In einer vorteilhaften Ausgestaltung der Erfindung kann vorgesehen sein, dass die zweite Gehäuseschale für die Zugänglichkeit des Kontaktelements in dem Vormontagezustand eine Durchführung für das Kontaktelement des Gegensteckverbinders aufweist. Grundsätzlich kann allerdings eine beliebige Ausgestaltung der zweiten Gehäuseschale und/oder der ersten Gehäuseschale vorgesehen sein, um eine Zugänglichkeit des Kontaktelements in dem Vormontagezustand zur Kontaktierung des Gegensteckverbinders zu ermöglichen. Insbesondere sollte sichergestellt sein, dass der Steckverbinder mit dem Gegensteckverbinder zusammensteckbar ist, wenn sich das Steckverbindergehäuse in dem Vormontagezustand befindet.

In einer Weiterbildung der Erfindung kann vorgesehen sein, dass zumindest eine der beiden Gehäuseschalen wenigstens einen Rücksprung aufweist, um ein korrespondierendes Riegelelement des Gegensteckverbindergehäuses in Bezug auf die Montagerichtung formschlüssig aufzunehmen (also um die Bewegung der entsprechenden Gehäuseschale nach Aufnahme des Riegelelements in den Rücksprung entlang oder entgegen der Montagerichtung zu blockieren oder zumindest einzuschränken), wenn das Gegensteckverbindergehäuse in dem Vormontagezustand des Steckverbindergehäuses in Steckrichtung mit dem Steckverbindergehäuse verbunden wird.

Der Zustand der Steckverbindung, in dem sich das Steckverbindergehäuse in dem Vormontagezustand befindet und in dem das wenigstens eine Riegelelement des Gegensteckverbinders in dem wenigstens einen Rücksprung des Steckverbindergehäuses aufgenommen ist, wird nachfolgend auch als "Vorrastzustand" bezeichnet. In dem Vorrastzustand sind der Steckverbinder und der Gegensteckverbinder bereits miteinander verbunden, jedoch noch nicht miteinander verrastet. In einer Variante der Erfindung kann der Vorrastzustand allerdings auch entfallen - die Steckverbindung kann dann auch unmittelbar verriegelt werden ("Verriegelungszustand"), beispielsweise indem das Riegelelement in den Rücksprung einrastet, insbesondere wenn der Rücksprung hinter einer Kante eines Kopfabschnitts eines elastischen Federarms ausgebildet ist oder wenn das Riegelelement selbst an einem elastischen Federarm angeordnet ist.

Der wenigstens eine Rücksprung kann insbesondere in einer Seitenwand des Steckverbindergehäuses vorgesehen sein, beispielsweise in der Art einer Ausnehmung oder Vertiefung / Einbuchtung in der Seitenwand. Der Rücksprung kann alternativ oder ergänzend auch hinter einer Kante ausgebildet sein, insbesondere hinter einer Kante eines Kopfabschnitts eines elastischen Federarms, hinter der das Riegelelement einrasten kann.

Wenn die Riegelelemente des Gegensteckverbindergehäuses in die korrespondierenden Rücksprünge des Steckverbindergehäuses eingreifen, kann also zunächst eine Bewegung der Gehäuseschalen zurück in einen unmontierten Zustand blockiert werden.

Vorzugsweise sind mehrere Rücksprünge und mehrere jeweils korrespondierende Riegelelemente vorgesehen. Beispielsweise kann vorgesehen sein, dass die zweite Gehäuseschale entsprechende Rücksprünge auf voneinander abgewandten Seitenwandungen aufweist, insbesondere zwei Rücksprünge auf jeder der beiden voneinander abgewandten Seitenwände. Entsprechend kann das Gegensteckverbindergehäuse Riegelelemente auf voneinander abgewandten Seitenwänden aufweisen, vorzugsweise zwei Riegelelemente pro Seitenwand.

An dieser Stelle sei erwähnt, dass die Rücksprünge und Riegelelemente auch vertauscht angeordnet sein können, dass also beispielsweise eine der beiden Gehäuseschalen zumindest ein Riegelelement und das Gegensteckverbindergehäuse korrespondierende Rücksprünge aufweist. Auch eine Mischform kann gegebenenfalls vorgesehen sein.

In einer vorteilhaften Weiterbildung der Erfindung kann vorgesehen sein, dass der Verschiebeweg des Riegelelements aus dem Rücksprung entgegen der Steckrichtung formschlüssig blockiert ist, wenn sich die beiden Gehäuseschalen in der Verriegelungsposition befinden. Der Verschiebeweg kann hingegen freigegeben sein, wenn sich die beiden Gehäuseschalen in dem Vormontagezustand befinden.

Das Verschieben der beiden Gehäuseschalen relativ zueinander und/oder zu dem Kontaktelement kann somit dazu dienen, die Riegelelemente in den Rücksprüngen zu sichern oder freizugeben. Auf diese Weise kann die Steckverbindung in ihrem geschlossenen Zustand bereits durch einen reinen Formschluss verlässlich gesichert werden. Insbesondere die Kombination eines Formschlusses zwischen den beiden Gehäuseschalen und des Formschlusses zwischen zumindest einer der Gehäuseschalen und dem Gegensteckverbindergehäuse hat sich als besonders sicher und benutzerfreundlich herausgestellt.

Beispielsweise kann die vorstehend bereits genannte Linearführung, insbesondere eine Seitenführung in der Art einer klammerartig nach innen umgeschlagenen Seitenwandung der ersten Gehäuseschale, neben der Linearführung gleichzeitig auch eine formschlüssige Verriegelung der Riegelelemente in den Rücksprüngen ausbilden. Es können sich grundsätzlich allerdings beliebige Möglichkeiten ergeben, um die Riegelelemente in den Rücksprüngen zu sichern.

Gemäß einer Weiterbildung der Erfindung kann beispielsweise vorgesehen sein, dass der Verschiebeweg des Riegelelements aus dem Rücksprung entgegen der Steckrichtung in der Verriegelungsposition der beiden Gehäuseschalen blockiert ist, indem der das Riegelelement aufnehmende Rücksprung einer der Gehäuseschalen durch einen Vorsprung (beispielsweise einen Stift, einen Steg oder eine Schulter) der anderen Gehäuseschale verschlossen ist, beispielsweise zumindest teilweise abgedeckt ist.

Der Vorsprung (z. B. der Stift, der Steg oder die Schulter) kann beispielsweise durch eine Seitenwandung der Gehäuseschale ausgebildet sein oder von einer Seitenwandung der Gehäuseschale ausgehen, beispielsweise ausgehend von der Seitenwandung, die gleichzeitig die Linearführung für die beiden Gehäuseschalen ausbildet.

Gemäß einer Weiterbildung der Erfindung kann beispielsweise auch vorgesehen sein, dass der Verschiebeweg des Riegelelements aus dem Rücksprung entgegen der Steckrichtung in der Verriegelungsposition der beiden Gehäuseschalen blockiert ist, indem ein den Rücksprung ausbildendes Gehäuseelement der Gehäuseschale (beispielsweise ein den Rücksprung aufweisender Federarm) hinter dem Riegelelement des Gegensteckverbindergehäuses einrastbar ist, so dass das Riegelelement und der Rücksprung einander formschlüssig hintergreifen. Das Riegelelement kann hierfür eine geeignete Kante aufweisen; alternativ oder zusätzlich kann in dem Gegensteckverbindergehäuse unmittelbar hinter dem Riegelelement eine Nut oder eine sonstige Vertiefung vorgesehen sein, in die das den Rücksprung ausbildende Gehäuseelement (z. B. ein Kopfabschnitt des Federarms) eingreifen kann.

In einer vorteilhaften Weiterbildung der Erfindung kann vorgesehen sein, dass die erste Gehäuseschale ein erstes Rastmittel und die zweite Gehäuseschale ein mit dem ersten Rastmittel korrespondierendes, zweites Rastmittel aufweist, um die beiden Gehäuseschalen formschlüssig relativ zueinander zu fixieren, nachdem die beiden Gehäuseschalen die Verriegelungsposition erreicht haben.

Die Rastmittel können insbesondere eine Schnappverbindung ausbilden, wobei eines der Rastmittel als Schnapphaken und das andere Rastmittel als Ausnehmung, Vertiefung oder Rücksprung zur Aufnahme des Schnapphakens ausgebildet ist.

Auf vorteilhafte Weise kann somit die Steckverbindung, also die Verbindung zwischen Steckverbindergehäuse und Gegensteckverbindergehäuse, formschlüssig verriegelt und gesichert werden, indem eine Verrastung zwischen erster Gehäuseschale und zweiter Gehäuseschale des Steckverbindergehäuses in der Verriegelungsposition erfolgt, insbesondere wenn eine der beiden Gehäuseschalen in der Verriegelungsposition den Verschiebeweg der Riegelelemente des Gegensteckverbindergehäuses aus den Rücksprüngen der anderen Gehäuseschale blockiert.

Gemäß einer vorteilhaften Weiterbildung kann vorgesehen sein, dass der elektrische Steckverbinder wenigstens ein Federelement aufweist das ausgebildet ist, um das Kontaktelement mit einer in Richtung auf den Gegensteckverbinder weisende Federkraft zu beaufschlagen.

Durch den von dem Federelement verursachten Kontaktdruck kann ein besonders guter elektrischer Kontakt zwischen dem Kontaktelement und dem Gegenkontaktelement bereitgestellt werden. Die Steckverbindung kann sich somit für eine besonders hohe Stromübertragung eignet und insbesondere robust gegenüber äußeren Einflüssen sein, wie beispielsweise Vibrationen oder Erschütterungen.

Es kann alternativ oder zusätzlich auch vorgesehen sein, dass der Gegensteckverbinder wenigstens ein Federelement aufweist, insbesondere ein Federelement, um das Gegenkontaktelement mit einer in Richtung auf den Steckverbinder weisenden Federkraft zu beaufschlagen. Merkmale und Vorteile, die sich vorliegend auf das wenigstens eine Federelement des Steckverbinders beziehen, können demnach analog auch auf ein entsprechendes Federelement des Gegensteckverbinders bezogen verstanden werden - und umgekehrt.

Um einen konstanten Kontaktdruck über die gesamte Kontaktierungsfläche zu erhalten, kann vorgesehen sein, dass sich das wenigstens eine Federelement möglichst entlang der gesamten Längserstreckung des Kontaktelements erstreckt, oder dass mehrere einzelne Federelemente entsprechend verteilt angeordnet sind.

Gemäß einer Ausgestaltung der Erfindung kann vorgesehen sein, dass das wenigstens eine Federelement zwischen dem Steckverbindergehäuse, vorzugsweise der ersten Gehäuseschale, und dem elektrischen Leiter bzw. dem Kontaktelement angeordnet ist. Das Steckverbindergehäuse kann optional in dem Bereich, in dem sich das Federelement abstützt, verstärkt sein.

Gemäß einer Weiterbildung der Erfindung kann vorgesehen sein, dass das Kontaktelement zur Verwendung in der Hochvolttechnik ausgebildet ist, vorzugsweise zur Übertragung elektrischer Ströme von über 10 Ampere.

Der Begriff "Hochvolt" ist vorliegend insbesondere auf Systeme für die Fahrzeugtechnik zu beziehen. Eine Hochvoltübertragung im Sinne dieser Erfindung kann insbesondere auf Wechselspannungen über 30 V bis 1 kV oder mehr oder auf Gleichspannungen über 60 V bis 2,0 kV oder mehr bezogen sein. Vorzugsweise ist das Kontaktelement und/oder der elektrische Leiter zur Übertragung hoher elektrischer Ströme (z. B. bis zu 100 Ampere, bis zu 200 Ampere, bis zu 300 Ampere, bis zu 400 Ampere, bis zu 500 Ampere, bis zu 600 Ampere, bis zu 700 Ampere, bis zu 1.500 Ampere, bis zu 2.000 Ampere oder mehr) bei vorzugsweise hohen elektrischen Spannungen (z. B. bis zu 500 Volt, bis zu 600 Volt, bis zu 700 Volt, bis zu 800 Volt, bis zu 900 Volt, bis zu 1.000 Volt, bis zu 1.100 Volt, bis zu 1.500 Volt, bis zu 2.000 Volt oder mehr) ausgelegt.

Die Erfindung betrifft auch ein elektrisches Verbindungselement, aufweisend wenigstens einen elektrische Steckverbinder (vorzugsweise wenigstens zwei elektrische Steckverbinder) gemäß den vorstehenden und nachfolgenden Ausführungen und den elektrischen Leiter, wobei an zumindest einem Ende des elektrischen Leiters einer der Steckverbinder angeordnet ist. Vorzugsweise ist an den voneinander abgewandten Enden des elektrischen Leiters jeweils einer der elektrischen Steckverbinder gemäß den vorstehenden und nachfolgenden Ausführungen angeordnet.

Vorzugsweise ist der elektrische Leiter als Stromschiene oder als Kabel mit im Bereich der Enden kompaktierten Einzeldrähten ausgebildet.

Bei Verwendung einer Stromschiene kann optional ein einteiliges oder mehrteiliges Abdeckelement aus einem elektrisch nichtleitenden Material vorgesehen sein, um die Stromschiene zwischen den Kontaktelementen bzw. zwischen den Steckverbindern gegen eine unbeabsichtigte Berührung zu sichern.

Die genannten Einzeldrähte des Kabels können beispielsweise miteinander kaltverschweißt sein, um vorzugsweise einen plattenförmigen Endabschnitt auszubilden. Die Verwendung eines Kabels mit kompatiblen Einzeldrähten anstatt einer Stromschiene kann von Vorteil sein, da das Kabel durch einen üblicherweise vorhandenen Kabelmantel bereits einen Berührschutz zwischen den Steckverbindern bereitstellen kann.

Das vorgeschlagene Verbindungselement eignet sich insbesondere für die elektrische Verbindung von Batteriezellen bzw. Batteriemodulen untereinander. Das Verbindungselement kann insbesondere ausgebildet sein, um die Pole von zwei Batterien miteinander zu verbinden. Das Verbindungselement kann allerdings auch ausgebildet sein, um einen Pol einer Batterie mit einer sonstigen elektrischen Einrichtung zu verbinden, beispielsweise mit einem elektrischen Verbraucher, wie einem Elektromotor. Das Verbindungselement kann außerdem auch ausgebildet sein, um mehr als zwei Batterien miteinander zu verbinden, beispielsweise drei, vier, fünf, sechs oder noch mehr Batterien in Parallelschaltung und/oder Serienschaltung zu verbinden, insbesondere mittels jeweiliger Steckverbinder, die entlang des elektrischen Leiters verteilt angeordnet sind, beispielsweise an den Enden eines mehrfach verzweigten elektrischen Leiters. Es kann auch vorgesehen sein, dass sich aus einem Steckverbinder mehrere elektrische Leiter erstrecken, beispielsweise um einen T- bzw. Y-förmigen Verteiler bereitzustellen.

Unter dem Begriff "Batterie" bzw. "Batteriezelle" werden vorliegend vereinfachend nicht wiederaufladbare Speicher für elektrische Energie als auch wiederaufladbare Speicher für elektrische Energie zusammengefasst (auch unter dem Begriff "Akkumulator" bzw. "Akkumulatorzelle" bekannt).

In einer vorteilhaften Ausgestaltung der Erfindung kann vorgesehen sein, dass der Kontaktbereich und/oder die Stirnfläche des Gegenkontaktelements eine Beschichtung aufweisen, vorzugsweise eine korrosionsbeständige Beschichtung, beispielsweise eine Kupferbeschichtung oder eine Silberbeschichtung. Auf diese Weise kann eine Verschlechterung des Übergangswiderstands durch eine Oxidation vermieden werden (insbesondere, wenn Aluminium als Werkstoff für den Kontaktbereich bzw. das Gegenkontaktelement verwendet wird). Beispielsweise kann eine Beschichtung aus Kupfer oder Silber bzw. kann ein Kupferplättchen, ein Silberplättchen oder ein silberbeschichtetes Kupferplättchen vorgesehen sein.

Die Erfindung betrifft auch einen elektrischen Gegensteckverbinder zur elektrischen Verbindung eines mit dem Gegensteckverbinder verbundenen Anschlusselements einer elektrischen Einrichtung mit einem korrespondierenden elektrischen Steckverbinder (insbesondere, aber nicht ausschließlich, dem Steckverbinder gemäß den vorstehenden und nachfolgenden Ausführungen).

Das Gegenkontaktelement des Gegensteckverbinders kann mit dem Anschlusselement bzw. mit der elektrischen Einrichtung (beispielsweise einem Batteriepol oder einer Stromschiene eines Batteriemoduls) kraftschlüssig, beispielsweise durch Kontaktdruck, stoffschlüssig, beispielsweise durch Ultraschallschweißen, und/oder formschlüssig verbunden sein. Es kann auch vorgesehen sein, dass das Gegenkontaktelement mit dem Anschlusselement einteilig ausgebildet ist, beispielsweise als Stanz-Biegeteil oder als Gussteil.

Die Erfindung betrifft auch eine elektrische Steckverbindung, aufweisend einen elektrischen Steckverbinder gemäß den vorstehenden und nachfolgenden Ausführungen und den elektrischen Gegensteckverbinder. Der Gegensteckverbinder ist mit einer elektrischen Einrichtung verbunden, um im verbundenen Zustand der Steckverbindung eine elektrische Verbindung zwischen dem elektrischen Leiter und der elektrischen Einrichtung herzustellen.

Es kann vorgesehen sein, dass die elektrische Einrichtung ein Anschlusselement aufweist, das das Gegenkontaktelement ausbildet oder mit dem das Gegenkontaktelement elektrisch und vorzugsweise mechanisch verbunden ist.

Die vorgeschlagene elektrische Steckverbindung eignet sich besonders vorteilhaft als Hochvoltsteckverbindung, insbesondere zur Verwendung im Rahmen der Elektromobilität. Auf vorteilhafte Weise kann durch die elektrische Steckverbindung beispielsweise ein Zellmodulverbinder-Interface zur Verbindung von Batteriezellmodulen bereitgestellt werden, bei besonders vorteilhafter Ausgestaltung der Kontaktierung.

Grundsätzlich kann sich die Erfindung allerdings zur Übertragung beliebiger Versorgungs- und/oder Kommunikationssignale eignen, also beispielsweise auch für Systeme in der Fahrzeugtechnik, die mit Niederspannung betrieben werden, also insbesondere mit Wechselspannungen bis einschließlich 30 V oder Gleichspannungen bis einschließlich 60 V.

Bei der elektrischen Einrichtung kann es sich insbesondere um eine Batterie, beispielsweise eine Batterie eines Fahrzeugs, und bei dem Anschlusselement um einen Batteriepol der Batterie handeln. Es kann sich bei der elektrischen Einrichtung aber auch um einen elektrischen Verbraucher, wie einen Elektromotor, ein Ladegerät oder um eine sonstige elektrische Einrichtung handeln.

Bei dem Anschlusselement kann es sich beispielsweise auch um eine Stromschiene oder um einen elektrischen Leiter (z. B. um einen elektrischen Leiter eines Kabels) handeln.

In einer Ausgestaltung der Erfindung kann vorgesehen sein, dass das Gegenkontaktelement wenigstens eine Metallplatte aufweist. Die wenigstens eine Metallplatte kann an einer dem Kontaktelement zugewandten Seite zumindest einen Teil der Stirnfläche des Gegenkontaktelements ausbildet, um das Kontaktelement zu kontaktieren. Grundsätzlich kann das Gegenkontaktelement allerdings einen beliebigen Querschnitt aufweisen, und insbesondere auch als gefüllter, rechteckiger oder zylindrischer Körper ausgebildet sein.

Es kann vorgesehen sein, dass sich die wenigstens eine Metallplatte ausgehend von einer Basis erstreckt. Vorzugsweise sind wenigstens zwei Metallplatten vorgesehen, die von einer gemeinsamen Basis ausgehen. In einer besonders vorteilhaften Variante sind dabei zumindest zwei Metallplatten in U-förmiger Anordnung vorgesehen. Die Metallplatten verlaufen vorzugsweise parallel zueinander. Die Anzahl Metallplatten kann vorzugsweise der Anzahl Kontaktschenkel entsprechen, wobei vorzugsweise jeweils eine Metallplatte einen Kontaktschenkel mit ihrer Stirnseite bzw. Stirnfläche kontaktiert, wenn die Steckverbindung geschlossen ist. Durch die Aufteilung der Stromübertragung auf mehrere Metallplatten bzw. Kontaktschenkel lässt sich ein Berührschutz besonders einfach und sicher in die Steckverbindung integrieren, beispielsweise durch zwei benachbart zu den einzelnen Metallplatten und/oder Kontaktschenkeln eingefügte Berührschutzelemente.

In einer vorteilhaften Ausgestaltung der Erfindung kann vorgesehen sein, dass die Kontaktfläche des Kontaktelements gewölbt und die Stirnfläche des Gegenkontaktelements zu der Wölbung der Kontaktfläche komplementär ausgebildet ist. Die Kontaktfläche bzw. die zur Kontaktierung vorgesehene Stirnfläche kann sphärisch ausgeformt sein. Die Kontaktfläche kann konkav und die Stirnfläche konvex gewölbt sein - oder umgekehrt. Durch die gewölbte Ausgestaltung der Kontaktfläche bzw. der Stirnfläche kann ein Versatzausgleich in Steckrichtung der Steckverbindung ermöglicht werden. Insbesondere kann ein Verkippen zwischen Steckverbinder und Gegensteckverbinder ausgeglichen werden.

In einer Ausgestaltung der Erfindung kann vorgesehen sein, dass die Kontaktfläche des Kontaktelements und die Stirnfläche des Gegenkontaktelements eine gegenseitige Verzahnung oder Riffelung ausbilden. Das Kontaktelement und das Gegenkontaktelement können hierzu einzelne, nebeneinander angeordnete Zähne aufweisen, wobei die Zähne des Kontaktelements zwischen die Zähne des Gegenkontaktelements einzudringen vermögen. Vorzugsweise kann die Verzahnung Zähne mit linearen, spitz zulaufenden Zahnflanken aufweisen. Durch eine Verzahnung kann die Steckverbindung gegenüber mechanischen Kräften von außen, beispielsweise Vibrationen oder Erschütterungen, robuster ausgestaltet sein. Auch ein Versatzausgleich zwischen Steckverbinder und Gegensteckverbinder kann, insbesondere bei Verwendung von Zähnen mit linearen, spitz zulaufenden Zahnflanken, verbessert sein. Durch Verwendung einer gegenseitigen Verzahnung kann gegebenenfalls auch der erforderliche Kontaktdruck, beispielsweise der mittels dem wenigstens einen Federelement aufzubringende Kontaktdruck, verringert sein.

In einer vorteilhaften Ausgestaltung der Erfindung kann vorgesehen sein, dass die Zähne auf der Kontaktfläche und auf der Stirnfläche jeweils dem Verlauf eines Kreisbogens folgen. Vorzugsweise sind die Radien der jeweiligen Kreisbögen der einzelnen Zähne identisch. Es kann vorgesehen sein, dass die Verzahnung innerhalb eines bestimmten Winkelsegments gebogen verläuft. Auf diese Weise kann ein zweidimensionaler Versatzausgleich möglich sein. Zum Ausgleich des Versatzes in der von der Längsrichtung des elektrischen Leiters abweichenden Richtung kann das Kontaktelement bzw. der Steckverbinder relativ zu dem Gegenkontaktelement bzw. Gegensteckverbinder entlang des Kreisbogens verdreht werden. Insbesondere eine Kombination einer Verzahnung, die einem Kreisbogen folgt mit einer gewölbten Kontaktfläche bzw. Stirnfläche hat sich als besonders vorteilhaft herausgestellt, da auf diese Weise auch ein vertikaler Versatz (in Steckrichtung) kompensierbar sein kann. Das Kontaktelement kann hierzu relativ zu dem Gegenkontaktelement verkippt werden.

In einer vorteilhaften Ausgestaltung der Erfindung kann vorgesehen sein, dass das Gegenkontaktelement Vorsprünge und/oder Aussparungen aufweist, die ausgebildet sind, um von dem wenigstens ein Federelement des Steckverbinders hintergriffen zu werden, um den elektrischen Leiter bzw. das Kontaktelement und das Gegenkontaktelement gegenseitig zu verspannen. Beispielsweise kann das wenigstens eine Federelement zwei Schenkel aufweisen, mit deren Enden es in zwei Längsnuten des Gegenkontaktelements einfügbar ist. Auf diese Weise kann ein Kraftfluss zwischen dem Federelement und dem Kontaktelement sowie dem Gegenkontaktelement realisiert werden, ohne einen zusätzlichen Krafteintrag auf das Steckverbindergehäuse und/oder auf das Gegensteckverbindergehäuse zu verursachen. Eine Belastung des Steckverbindergehäuses bzw. Gegensteckverbindergehäuses wird damit vermieden. Das Federelement kann beispielsweise C-förmig ausgebildet sein.

Das wenigstens eine Federelement kann ausgebildet sein, um zusammen mit der ersten Gehäuseschale des Steckverbindergehäuses beim Verschieben der ersten Gehäuseschale in die Verriegelungsposition gleichzeitig über das Kontaktelement und das Gegenkontaktelement geschoben zu werden.

Die Kompression des Federelements kann gegebenenfalls auch durch Kompression mittels eines Hebelelements bewirkt werden, mit dem die erste Gehäuseschale über eine Kulissenführung in Richtung auf die zweite Gehäuseschale bewegt und anschließend verrastet wird.

In einer vorteilhaften Weiterbildung der Erfindung kann vorgesehen sein, dass das Gegensteckverbindergehäuse wenigstens ein Berührschutzelement aufweist, um einen Berührschutz für das Gegenkontaktelement bereitzustellen.

Wie bereits erwähnt betrifft die Erfindung außerdem auch einen Berührschutz, insbesondere einen Berührschutz für einen elektrischen Gegensteckverbinder (vorzugsweise für die Hochvolttechnik), aufweisend wenigstens ein Berührschutzelement. Das Berührschutzelement ist vorzugsweise Teil eines Steckverbindergehäuses bzw. Gegensteckverbindergehäuses, das ein Kontaktelement bzw. Gegenkontaktelement zumindest teilweise umhüllt. Vorzugsweise kann der erfindungsgemäße Berührschutz aus wenigstens zwei das Kontaktelement bzw. Gegenkontaktelement umgebenden, sich in eine Steckrichtung und in eine Richtung quer zur Steckrichtung erstreckenden, plattenförmigen Berührschutzelementen ausgebildet sein. Die plattenförmigen Berührschutzelemente ragen vorzugsweise in Steckrichtung und quer zu der Steckrichtung über das Gegenkontaktelement hinaus. Die Merkmale des Anspruchs 1 und der abhängigen Ansprüche sowie die in der vorliegenden Beschreibung beschriebenen Merkmale betreffen vorteilhafte Ausführungsformen und Varianten dieses Berührschutzes.

Vorzugsweise sind wenigstens zwei das Gegenkontaktelement umgebende, sich in Steckrichtung erstreckende, plattenförmige Berührschutzelemente vorgesehen. Beispielsweise können vier parallel versetzt zueinander angeordnete Berührschutzelemente vorgesehen sein, die das Gegenkontaktelement umgeben, insbesondere ein aus zwei oder mehreren Metallplatten gebildetes Gegenkontaktelement umgeben.

Die erfindungsgemäße Steckverbindung und der Berührschutz können besonders vorteilhaft innerhalb eines Fahrzeugs, insbesondere eines Kraftfahrzeugs, verwendet werden. Der Begriff "Fahrzeug" beschreibt dabei jegliches Fortbewegungsmittel, insbesondere Fahrzeuge zu Lande, zu Wasser oder in der Luft, eingeschlossen auch Raumfahrzeuge. Mögliche Einsatzgebiete sind insbesondere Hochvoltsteckverbindungen, vor allem bei Elektro- und/oder Hybridfahrzeugen. Die erfindungsgemäße Steckverbindung und der erfindungsgemäße Berührschutz eignen sich allerdings für beliebige Anwendungen innerhalb der gesamten Elektrotechnik und sind nicht auf den Einsatz in der Fahrzeugtechnik und auch nicht auf den Einsatz in der Hochvolttechnik beschränkt zu verstehen.

Die Erfindung betrifft auch ein Verfahren zur Herstellung eines elektrischen Steckverbinders gemäß den vorstehenden und nachfolgenden Ausführungen.

Die Erfindung betrifft außerdem ein Verfahren zur Bereitstellung einer elektrischen Verbindung über eine einen elektrischen Steckverbinder und einen elektrischen Gegensteckverbinder umfassende elektrische Steckverbindung, wobei eine elektrische Hochvoltübertragung zwischen dem elektrischen Steckverbinder und dem elektrischen Gegensteckverbinder eingerichtet wird. Es sind zumindest die folgenden Verfahrensschritte vorgesehen:
- Bereitstellen des elektrischen Steckverbinders und/oder des elektrischen Gegensteckverbinders;
- Verbinden eines in den elektrischen Steckverbinder mündenden elektrischen Leiters mit einem Gegenkontaktelement des elektrischen Gegensteckverbinders; und
- Verriegeln der elektrischen Steckverbindung durch Bewirken eines Formschlusses zwischen einem Steckverbindergehäuse des elektrischen Steckverbinders und einem Gegensteckverbindergehäuse des elektrischen Gegensteckverbinders.

Es ist daher auch eine Aufgabe der Erfindung, sicherheitstechnische Aspekte eines Verfahrens zur Bereitstellung einer elektrischen Verbindung über eine elektrische Steckverbindung, bei dem eine elektrische Hochvoltübertragung zwischen dem elektrischen Steckverbinder und dem elektrischen Gegensteckverbinder eingerichtet wird, zu verbessern.

Das beschriebene Verriegelungsprinzip ist einerseits für einen Monteur besonders komfortabel und kann sich außerdem gut zur Verwendung mit einem Steckverbinder mit umfassendem Berührschutz eignen. Das vorgeschlagene Verriegelungsprinzip kann nicht zuletzt zu einer besonders robusten und sicheren Verriegelung der Steckverbindung führen. Infolge kann eine Hochvoltübertragung sicher und verlässlich erfolgen.

Im Rahmen des Verfahrens kann insbesondere vorgesehen sein, dass die erste Gehäuseschale des Steckverbindergehäuses zunächst auf das Kontaktelement aufgesetzt wird, beispielsweise derart aufgesetzt wird, dass ein innenseitig angeordnetes Anschlagelement der ersten Gehäuseschale in eine Ausnehmung des Kontaktelements eindringt.

Nachdem die erste Gehäuseschale auf das Kontaktelement aufgesetzt wurde, kann eine zweite Gehäuseschale in eine Montagerichtung, vorzugsweise entlang einer Linearführung, mit der ersten Gehäuseschale bis zum Erreichen eines Vormontagezustand verbunden werden, wobei die beiden Gehäuseschalen in dem Vormontagezustand das Kontaktelement zwischen sich aufnehmen und eine Zugänglichkeit des Kontaktelements für das Gegenkontaktelement bereitstellen.

Nachdem sich das Steckverbindergehäuse in dem Vormontagezustand befindet, kann der Steckverbinder in Steckrichtung mit dem Gegensteckverbinder verbunden werden. Dabei kann vorzugsweise vorgesehen sein, dass Riegelelemente des Gegensteckverbindergehäuses in korrespondierende Rücksprünge zumindest einer der Gehäuseschalen eingeführt werden oder hinter korrespondierenden Rücksprüngen einer der Gehäuseschalen einrasten.

Anschließend kann vorgesehen sein, die Gehäuseschalen in die Verriegelungsposition zu verbringen. Spätestens in der Verriegelungsposition werden die Riegelelemente in den Rücksprüngen formschlüssig von zumindest einer der Gehäuseschalen blockiert, wobei die beiden Gehäuseschalen vorzugsweise in der Verriegelungsposition miteinander verrasten, insbesondere unter Verwendung entsprechender Rastmittel.

Zum Entriegeln der Steckverbindung kann umgekehrt vorgegangen werden, wobei zunächst die Rastverbindung zwischen den beiden Gehäuseschalen entriegelt wird und anschließend die Gehäuseschalen aus der gegenseitigen Verriegelungsposition bis in den Vormontagezustand bewegt werden. Anschließend kann die Steckverbindung getrennt und optional die zweite Gehäuseschale aus der ersten Gehäuseschale ausgezogen werden.

Merkmale, die im Zusammenhang mit einem der Gegenstände der Erfindung, namentlich gegeben durch den erfindungsgemäßen elektrischen Steckverbinder, das erfindungsgemäße elektrische Verbindungselement, den erfindungsgemäßen elektrischen Gegensteckverbinder, die erfindungsgemäße elektrische Steckverbindung, das erfindungsgemäße Verfahren zur Herstellung des elektrischen Steckverbinders, das erfindungsgemäße Verfahren zur Bereitstellung der elektrischen Verbindung der Steckverbindung und den erfindungsgemäßen Berührschutz beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Die Erfindung betrifft auch einen von Anspruch 1 unabhängigen elektrischen Steckverbinder (insbesondere einen Hochvoltsteckverbinder) zur elektrischen Verbindung eines in den Steckverbinder mündenden elektrischen Leiters mit einem korrespondierenden elektrischen Gegensteckverbinder, aufweisend ein mit dem elektrischen Leiter verbundenes Kontaktelement und ein das Kontaktelement zumindest teilweise umhüllendes Steckverbindergehäuse, wobei das Steckverbindergehäuse ausgebildet ist, um zur mechanischen Sicherung der elektrischen Verbindung mit einem Gegensteckverbindergehäuse des Gegensteckverbinders formschlüssig zu verriegeln. Hierzu kann beispielsweise vorgesehen sein, dass eine erste Gehäuseschale des Steckverbindergehäuses und eine weitere Steckverbinderkomponente, beispielsweise das Kontaktelement, relativ zueinander bis in eine Verriegelungsposition verschiebbar sind, in der die erste Gehäuseschale und die weitere Steckverbinderkomponente (insbesondere das Kontaktelement) verriegelt sind und in der die erste Gehäuseschale und/oder die weitere Steckverbinderkomponente (insbesondere das Kontaktelement) mit dem Gegensteckverbindergehäuse des Gegensteckverbinders formschlüssig verriegelt sind. Die weiteren Merkmale des Anspruchs 1 und der abhängigen Ansprüche sowie die in der vorliegenden Beschreibung beschriebenen Merkmale betreffen vorteilhafte Ausführungsformen und Varianten dieses Steckverbinders. Insbesondere können alle oder einzelne Merkmale der zweiten Gehäuseschale auch auf das elektrische Kontaktelement übertragen werden, das dann entsprechend mit der ersten Gehäuseschale zusammenwirken kann, wie vorstehend in Bezug auf die zweite Gehäuseschale beschrieben.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine perspektivische Darstellung eines erfindungsgemäßen elektrischen Verbindungselements zur Verbindung von zwei elektrischen Einrichtungen, mit an den beiden Enden des Verbindungselements angeordneten elektrischen Steckverbindern zur Kontaktierung von elektrischen Gegensteckverbindern der jeweiligen elektrischen Einrichtung;
- Figur 2: eine perspektivische Darstellung eines Gegensteckverbinders mit einem Gegensteckverbindergehäuse und einem zwischen Berührschutzelementen des Gegensteckverbindergehäuses angeordneten Gegenkontaktelement;
- Figur 3: eine perspektivische Darstellung der Verbindung zwischen Kontaktelement und Gegenkontaktelement einer der Steckverbindungen der Figur 1;
- Figur 4: ein beispielhaftes Gegenkontaktelement in einer perspektivischen Einzeldarstellung;
- Figur 5: die Montage einer ersten Gehäuseschale des Steckverbindergehäuses auf das Kontaktelement;
- Figur 6: die Montage zwischen der ersten Gehäuseschale und einer zweiter Gehäuseschale, ausgehend von einem unmontierten Zustand bis in einen Vormontagezustand entlang einer Montagerichtung;
- Figur 7: den Steckvorgang zwischen Steckverbinder und Gegensteckverbinder entlang der Steckrichtung, nachdem das Steckverbindergehäuse in den Vormontagezustand verbracht wurde;
- Figur 8: das Einführen von Riegelelementen des Gegensteckverbindergehäuses in korrespondierende Rücksprünge in der zweiten Gehäuseschale des Steckverbindergehäuses, während des Zusammensteckens der Steckverbindung;
- Figur 9: das Verschieben der ersten Gehäuseschale, ausgehend von einem Vorrastzustand der Steckverbindung, bis in die Verriegelungsposition des Steckverbindergehäuses;
- Figur 10: die vollständig verriegelte Steckverbindung;
- Figur 11: eine Schnittdarstellung einer der elektrischen Steckverbindungen der Figur 1 zur Darstellung eines Federelements zwischen Steckverbindergehäuse und Kontaktelement;
- Figur 12: eine perspektivische Darstellung eines Federelements zur gegenseitigen Verspannung zwischen Kontaktelement und Gegenkontaktelement;
- Figur 13: ein Kontaktelement und ein Gegenkontaktelement mit einer gegenseitigen Verzahnung gemäß einer ersten Variante in einer perspektivischen Darstellung;
- Figur 14: ein Kontaktelement gemäß einer weiteren Variante in einer seitlichen Schnittdarstellung;
- Figur 15: ein Gegenkontaktelement zur Verbindung mit dem Kontaktelement der Figur 14 in einer ersten Seitenansicht;
- Figur 16: das Gegenkontaktelement der Figur 15 in einer zweiten Seitenansicht;
- Figur 17: das Gegenkontaktelement der Figur 15 in einer Draufsicht auf die Stirnfläche;
- Figur 18: die Montage einer ersten Gehäuseschale des Steckverbindergehäuses auf das Kontaktelement gemäß einem zweiten Ausführungsbeispiel;
- Figur 19: die Montage zwischen der ersten Gehäuseschale und einer zweiter Gehäuseschale, ausgehend von einem unmontierten Zustand bis in einen Vormontagezustand entlang einer Montagerichtung, gemäß zweitem Ausführungsbeispiel;
- Figur 20: den Vormontagezustand des Steckverbindergehäuses, gemäß zweitem Ausführungsbeispiel;
- Figur 21: den Steckvorgang zwischen Steckverbinder und Gegensteckverbinder entlang der Steckrichtung, nachdem das Steckverbindergehäuse in den Vormontagezustand verbracht wurde, gemäß zweitem Ausführungsbeispiel;
- Figur 22: das Einführen von Riegelelementen des Gegensteckverbindergehäuses in korrespondierende Rücksprünge in der ersten Gehäuseschale des Steckverbindergehäuses, während des Zusammensteckens der Steckverbindung, gemäß zweitem Ausführungsbeispiel;
- Figur 23: die vollständig verriegelte Steckverbindung, gemäß zweitem Ausführungsbeispiel;
- Figur 24: die Montage einer ersten Gehäuseschale des Steckverbindergehäuses auf das Kontaktelement gemäß einem dritten Ausführungsbeispiel;
- Figur 25: die Montage zwischen der ersten Gehäuseschale und einer zweiter Gehäuseschale, ausgehend von einem unmontierten Zustand bis in einen Vormontagezustand entlang einer Montagerichtung, gemäß drittem Ausführungsbeispiel;
- Figur 26: den Steckvorgang zwischen Steckverbinder und Gegensteckverbinder entlang der Steckrichtung, nachdem das Steckverbindergehäuse in den Vormontagezustand verbracht wurde, gemäß drittem Ausführungsbeispiel;
- Figur 27: das Einführen von Riegelelementen des Gegensteckverbindergehäuses in korrespondierende Rücksprünge in der ersten Gehäuseschale des Steckverbindergehäuses, während des Zusammensteckens der Steckverbindung, gemäß drittem Ausführungsbeispiel;
- Figur 28: eine Schnittdarstellung der in Figur 27 gezeigten Steckverbindung entlang der Schnittlinie A-A;
- Figur 29: eine Schnittdarstellung entlang der Schnittlinie A-A der Figur 27 durch die vollständig verriegelte Steckverbindung gemäß drittem Ausführungsbeispiel;
- Figur 30: eine beispielhafte Verliersicherung für die beiden Gehäuseschalen in dem Vormontagezustand der beiden Gehäuseschalen; und
- Figur 31: einen Zustand der in Figur 30 dargestellten Verliersicherung, nachdem die Gehäuseschalen in die Verriegelungsposition verschoben wurden.

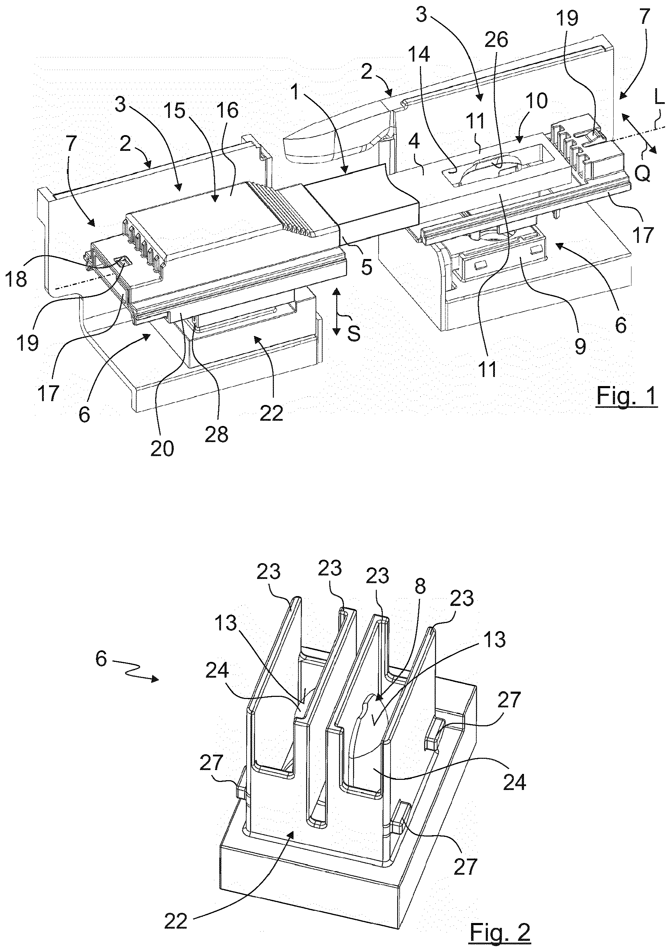

Figur 1 zeigt in perspektivischer Darstellung ein elektrisches Verbindungselement 1 zur Verbindung von zwei elektrischen Einrichtungen 2. Das Verbindungselement 1 weist an seinen beiden Enden jeweils einen elektrischen Steckverbinder 3 auf. Bei den elektrischen Einrichtungen 2 kann es sich beispielsweise um Batteriemodule handeln, die durch das Verbindungselement 1 miteinander verschaltet werden sollen. Grundsätzlich kann es sich allerdings um beliebige elektrische Einrichtungen 2 handeln.

Das Verbindungselement 1 weist einen als Stromschiene ausgebildeten elektrischen Leiter 4 auf. Alternativ zur Verwendung einer Stromschiene 4 kann beispielsweise auch ein elektrisches Kabel mit im Bereich der beiden Enden kompaktierten Einzeldrähten, beispielsweise kaltverschweißten Einzeldrähten, vorgesehen sein.

Zur Bereitstellung eines geeigneten Berührschutzes kann zwischen den beiden Steckverbindern 3 ein elektrisch nichtleitendes Abdeckelement 5 vorgesehen sein, das den elektrischen Leiter 4 umhüllt.

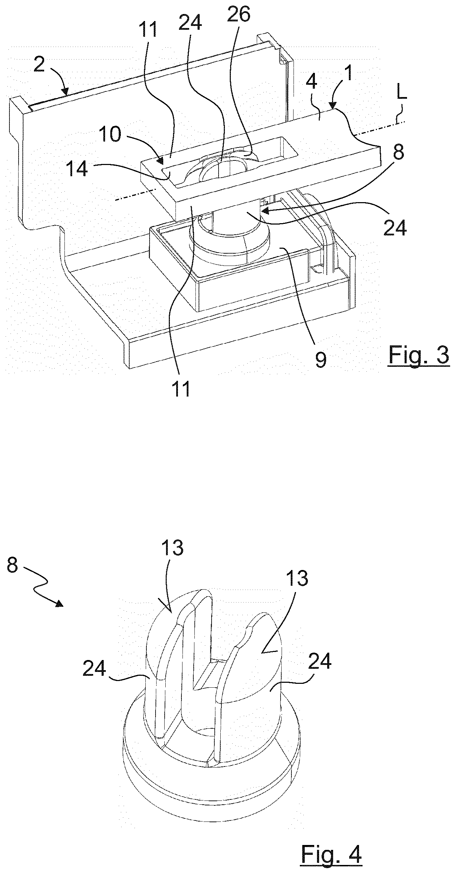

Der jeweilige elektrische Steckverbinder 3 ist ausgebildet, den elektrischen Leiter 4 über einen elektrischen Gegensteckverbinder 6 mit der elektrischen Einrichtung 2 zu verbinden. Der Steckverbinder 3 bildet somit mit dem Gegensteckverbinder 6 eine jeweilige elektrische Steckverbindung 7 aus, wobei der Gegensteckverbinder 6 über ein Gegenkontaktelement 8 (vgl. beispielsweise die Figuren 2 und 4) mit einem Anschlusselement 9 (beispielsweise einem Batteriepol) der elektrischen Einrichtung 2 verbunden ist.

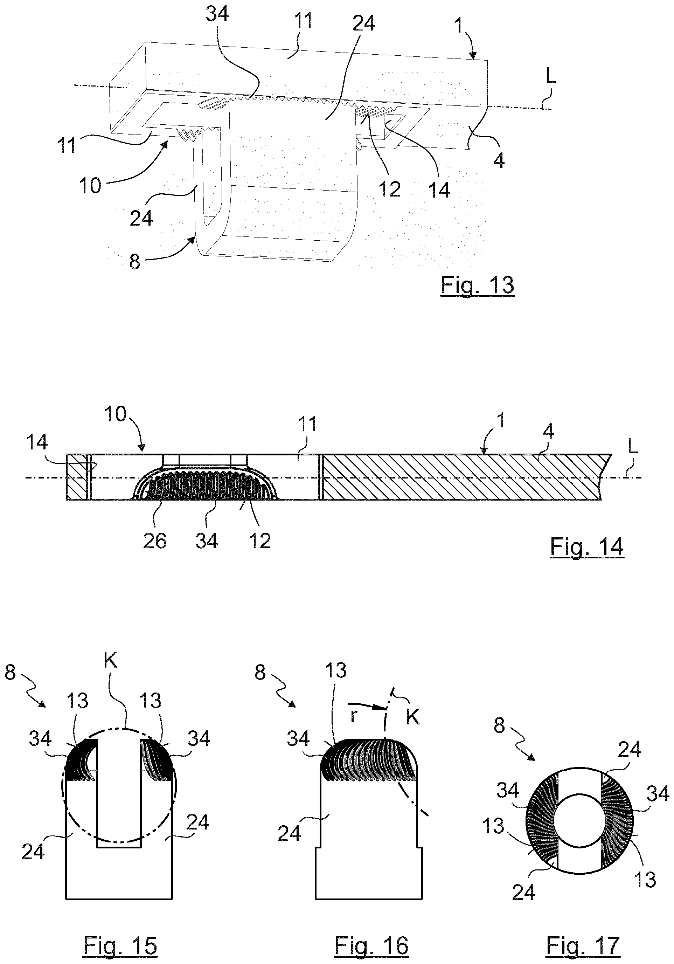

Zur Verbindung mit dem Gegenkontaktelement 8 weist der elektrische Steckverbinder 3 ein Kontaktelement auf, das in den Ausführungsbeispielen als mit dem elektrischen Leiter 4 einteiliger Kontaktbereich 10 ausgebildet ist (was jedoch nicht zwingend der Fall sein muss. Das Kontaktelement, vorliegend also der Kontaktbereich 10, kontaktiert das Gegenkontaktelement 8 des Gegensteckverbinders 6. Der Kontaktbereich 10 ist vorzugsweise aus einem plattenförmigen Endabschnitt des elektrischen Leiters 4 ausgeformt und weist zumindest zwei sich entlang der Längsachse L des elektrischen Leiters 4 erstreckende Kontaktschenkel 11 auf, die auf ihrer dem Gegenkontaktelement 8 zugewandten Schenkelfläche (vgl. insbesondere Figur 13) jeweils einen Teil einer Kontaktfläche 12 ausbilden, um das Gegenkontaktelement 8 jeweils auf einer Stirnfläche 13 (vgl. insbesondere Figur 4) zu kontaktieren. Die Kontaktschenkel 11 sind vorzugsweise durch eine zwischen den Kontaktschenkeln 11 angeordnete Ausnehmung 14 ausgebildet und im Bereich der Enden des elektrischen Leiters 4 miteinander verbunden. Die Kontaktschenkel 11 können allerdings auch freie Enden aufweisen.

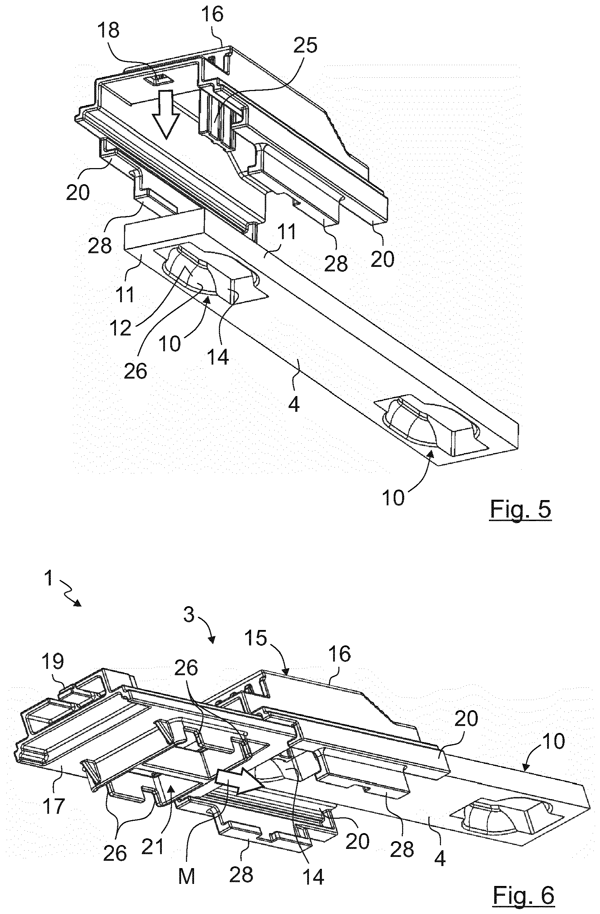

Der elektrische Steckverbinder 3 umfasst ein mehrteiliges Steckverbindergehäuse 15. In den Ausführungsbeispielen weist das Steckverbindergehäuse 15 eine erste Gehäuseschale 16 ("Oberschale") und eine mit der ersten Gehäuseschale 16 verbindbare zweite Gehäuseschale 17 ("Unterschale") auf (vgl. insbesondere die Figuren 6, 19 und 25). Die beiden Gehäuseschalen 16, 17 sind zur formschlüssigen Verriegelung der Steckverbindung 7 relativ zueinander bis in eine Verriegelungsposition verschiebbar.

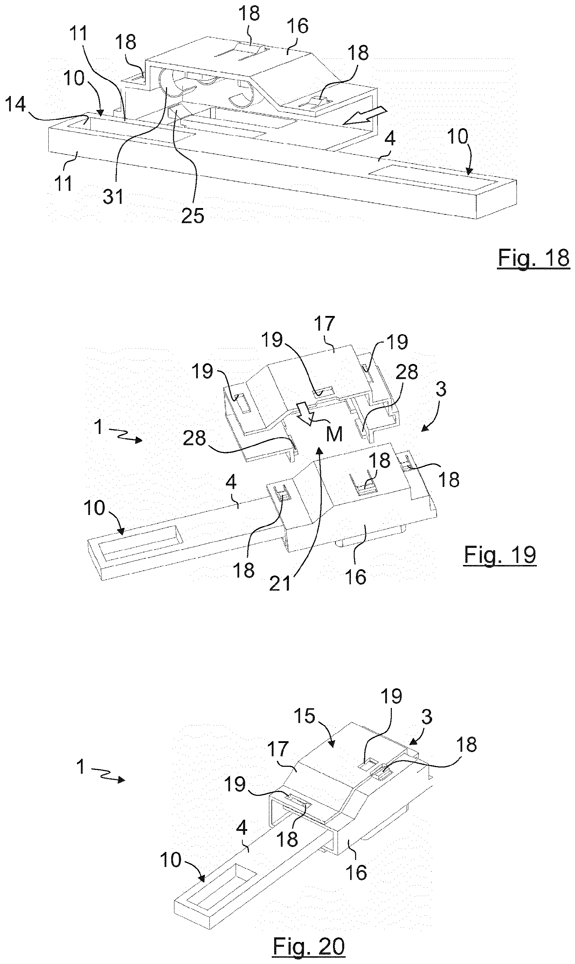

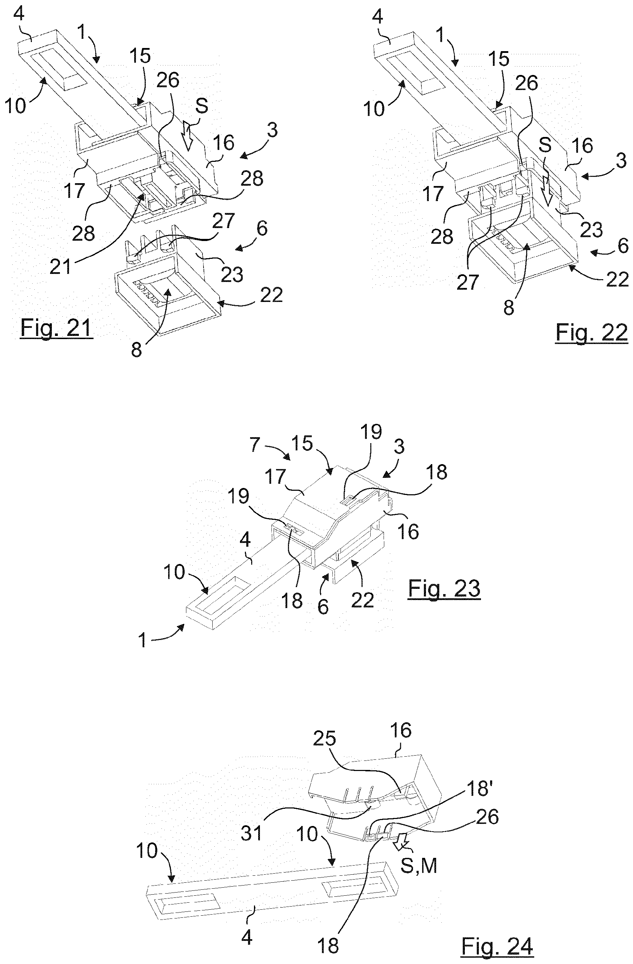

Dieser Vorgang wird nachfolgend insbesondere anhand von drei exemplarischen Ausführungsbeispielen erläutert. Die Figuren 1 bis 10 zeigen ein erstes, bevorzugtes Ausführungsbeispiel, die Figuren 18 bis 23 ein zweites Ausführungsbeispiel und die Figuren 24 bis 29 ein drittes Ausführungsbeispiel.

In dem ersten Ausführungsbeispiel der Erfindung, das insbesondere in den Figuren 1 bis 10 dargestellt ist, weist die erste Gehäuseschale 16 zur Verrastung der Verbindung zwischen dem Steckverbinder 3 und dem Gegensteckverbinder 6 sowie zur gleichzeitigen Verrastung der beiden Gehäuseschalen 16, 17 ein erstes Rastmittel 18 und die zweite Gehäuseschale 17 ein mit dem ersten Rastmittel 18 korrespondierendes, zweites Rastmittel 19 auf.

In dem zweiten Ausführungsbeispiel weist die erste Gehäuseschale 16 drei erste Rastmittel 18 und die zweite Gehäuseschale 17 drei korrespondierende, zweite Rastmittel 19 auf.

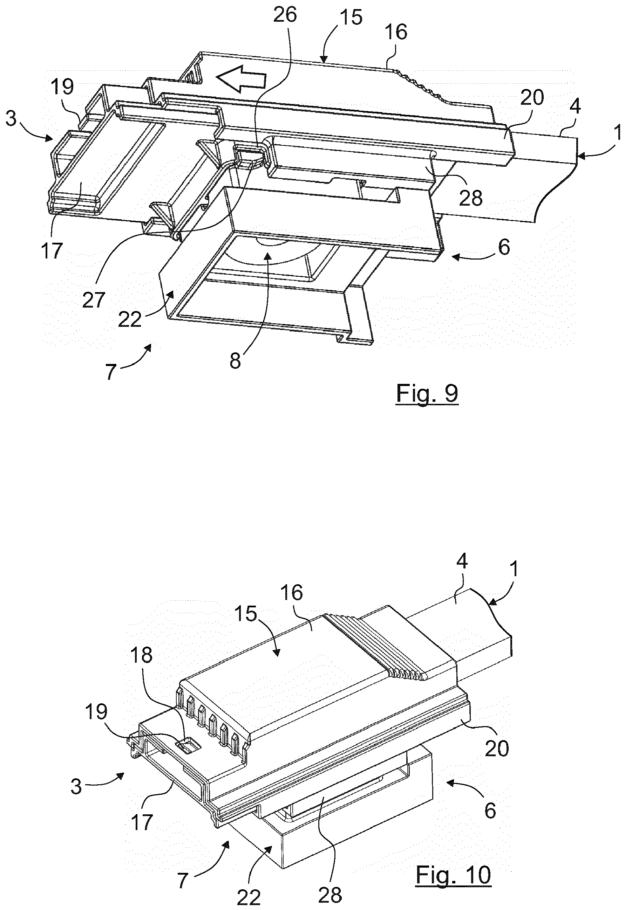

Es können beliebig viele Rastmittel 18, 19 vorgesehen sein. Durch die Rastmittel 18, 19, die in den ersten beiden Ausführungsbeispielen als Kombination aus Schnapphaken und Rastausnehmung ausgebildet sind, vermögen sich die beiden Gehäuseschalen 16, 17 formschlüssig aneinander zu fixieren, nachdem die Gehäuseschalen 16, 17 in die Verriegelungsposition verschoben wurden (vgl. Zusammenschau der Figuren 9 und 10 bezüglich des ersten Ausführungsbeispiels bzw. Figur 23 bezüglich des zweiten Ausführungsbeispiels).

In dem ersten Ausführungsbeispiel ist die erste Gehäuseschale 16 in Längsrichtung des Kontaktelements 10, also parallel zu der Längsachse L des Kontaktelements 10, verschiebbar, um die beiden Gehäuseschalen 16, 17 in die gegenseitige Verriegelungsposition zu verbringen.

Eine mögliche Alternative wird in dem zweiten Ausführungsbeispiel demonstriert, wonach die zweite Gehäuseschale 17 in Querrichtung Q (vgl. Figur 1) des Kontaktelements 10 verschiebbar ist. Grundsätzlich kann eine beliebige Verschiebung zumindest einer der Gehäuseschalen 16, 17 parallel zu der Kontaktfläche 12 des Kontaktelements 10 vorgesehen sein, vorzugsweise jedoch entlang bzw. auf dem Kontaktelement 10.

Es kann sogar vorgesehen sein, die erste Gehäuseschale 16 in Steckrichtung S des Steckverbinders 3 oder entgegen der Steckrichtung S des Steckverbinders 3 in die Verriegelungsposition zu verschieben. Diese Variante ist im Rahmen des dritten Ausführungsbeispiels der Figuren 24 bis 29 dargestellt und wird nachfolgend noch näher beschrieben.

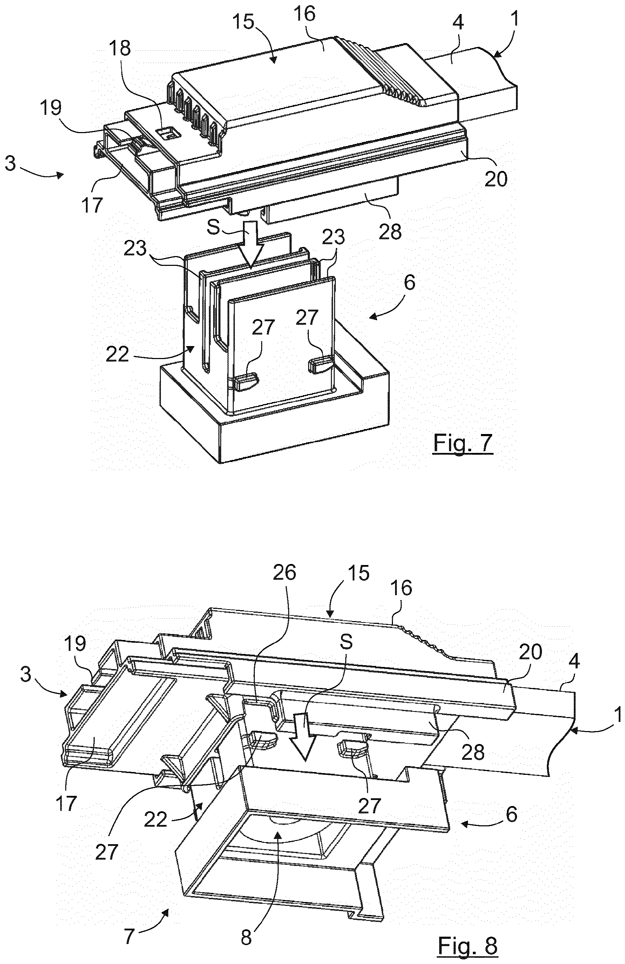

Die beiden Gehäuseschalen 16, 17 bilden vorzugsweise in einer Montagerichtung M (vgl. Figuren 6, 19 und 25 für das jeweilige Ausführungsbeispiel) eine gegenseitige Linearführung aus, wodurch die Gehäuseschalen 16, 17 zunächst ausgehend von einem unmontierten Zustand (in den Figuren 6, 19 und 25 für das jeweilige Ausführungsbeispiel gezeigt) bis in einen Vormontagezustand (vgl. Figuren 7, 20 und 26) verschiebbar sind.

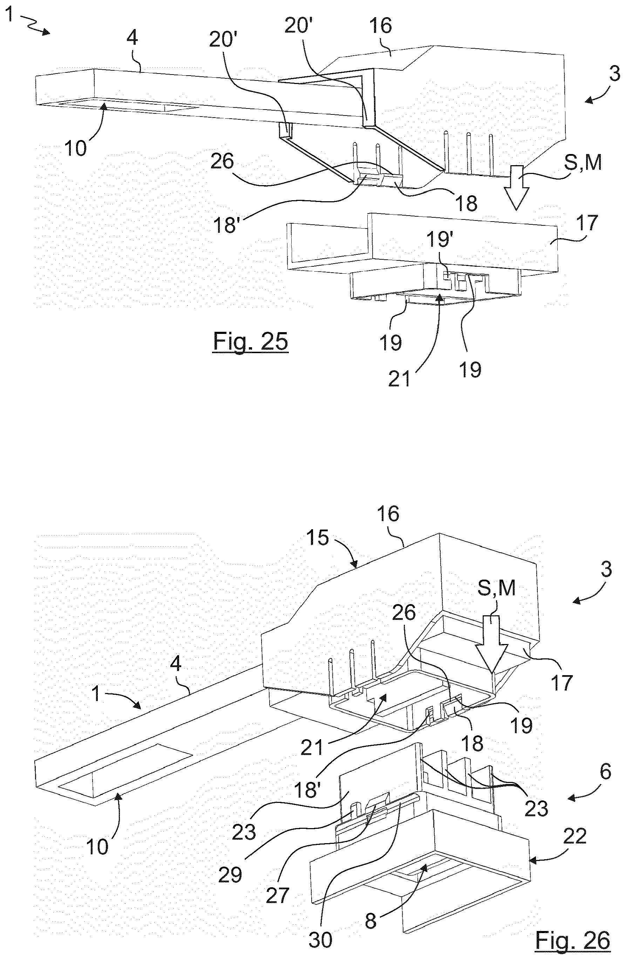

Zur Bereitstellung der Linearführung weist die erste Gehäuseschale 16 in dem ersten Ausführungsbeispiel parallel zu der Längsachse L des Kontaktelements 10 verlaufende Seitenführungen 20 auf, die die zweite Gehäuseschale 17 zu umgreifen und zu führen vermögen. In dem zweiten Ausführungsbeispiel sind die Außengeometrien der beiden Gehäuseschalen 16, 17 entsprechend komplementär ausgebildet, um die gegenseitige Linearführung beim ineinanderstecken der Gehäuseschalen 16, 17 bereitzustellen. In dem dritten Ausführungsbeispiel ist die zweite Gehäuseschale 17 durch Seitenstege 20' der ersten Gehäuseschale 16 geführt (vgl. Figur 25).

Das Kontaktelement 10 ist in dem Vormontagezustand zwischen den beiden Gehäuseschalen 16, 17 derart aufgenommen, dass die Kontaktfläche 12 des Kontaktelements 10 für die Kontaktierung mit der Stirnfläche 13 des Gegenkontaktelements 8 des Gegensteckverbinders 6 zugänglich ist. Die zweite Gehäuseschale 17 weist für die Zugänglichkeit des Kontaktelements 10 in dem Vormontagezustand eine Durchführung 21 für das Kontaktelement 10 des Gegensteckverbinders 6 auf (vgl. beispielsweise Figur 6).

Der Gegensteckverbinder 6 weist ein Gegensteckverbindergehäuse 22 auf (vgl. insbesondere Figur 2). Vorzugsweise sind das Steckverbindergehäuse 15 und das Gegensteckverbindergehäuse 22 aus einem elektrisch isolierenden Material ausgebildet. Steckverbindergehäuse 15 und/oder Gegensteckverbindergehäuse 22 können ausgebildet sein, um einen Berührschutz für die leitfähigen Teile der Steckverbindung 7 bereitzustellen. Ein besonders vorteilhafter Berührschutz kann mit der Steckverbindung 7 kombiniert werden, wenn die Kontaktfläche 12 in zwei oder mehr Kontaktschenkel 11 aufgeteilt ist, wie bereits beschreiben. In diesem Fall können einzelne Berührschutzelemente 23 des Gegensteckverbindergehäuses 22 (vgl. beispielsweise Figur 2) benachbart zu den Kontaktschenkeln 11 hindurchgeführt werden, wobei dennoch eine hohe Stromübertragung möglich ist.

Es kann vorgesehen sein, dass das Gegenkontaktelement 8 wenigstens eine Metallplatte 24 aufweist (vgl. insbesondere Figur 4). In den Ausführungsbeispielen sind zwei sich von einer gemeinsamen Basis erstreckende Metallplatten 24 vorgesehen, wobei die Metallplatten 24 an einer dem Kontaktbereich 10 zugewandten Seite zumindest einen Teil der Stirnfläche 13 ausbilden, um das Kontaktelement 10 zu kontaktieren. Vorzugsweise weist das Gegensteckverbindergehäuse 22 wenigstens zwei das Gegenkontaktelement 8 umgebende oder durchgreifende, sich in Steckrichtung S erstreckende, plattenförmige Berührschutzelemente 23 auf, wie in Figur 2 gut erkennbar.

Zur Sicherstellung, dass die Steckverbindung 7 nach dem Herstellen der Verbindung sicher geschlossen bleibt, ist eine Verriegelung zwischen dem elektrischen Steckverbinder 3 und dem Gegensteckverbinder 6 vorgesehen, insbesondere eine Verriegelung zwischen dem Steckverbindergehäuse 15 und dem Gegensteckverbindergehäuse 22. Das Verriegelungsprinzip soll anhand eines entsprechenden Verfahrens nachfolgend beschrieben werden. Im Rahmen dieses Verfahrens kann insbesondere eine elektrische Hochvoltübertragung zwischen dem elektrischen Steckverbinder 3 und dem elektrischen Gegensteckverbinder 6 (oder eine sonstige elektrische Übertragung) eingerichtet werden.

Das Verfahren umfasst neben der Bereitstellung des Steckverbinders 3 bzw. des Verbindungselements 1 und/oder des Gegensteckverbinders 6 die folgenden, allgemeinen Verfahrensschritte:
- Verbinden des in den elektrischen Steckverbinder 3 mündenden elektrischen Leiters 4 mit dem Gegenkontaktelement 8 des elektrischen Gegensteckverbinders 6; und
- Verriegeln der elektrischen Steckverbindung 7 durch Bewirken eines Formschlusses zwischen dem Steckverbindergehäuse 15 des elektrischen Steckverbinders 3 und dem Gegensteckverbindergehäuse 22 des elektrischen Gegensteckverbinders 6.

Gemäß einem Verfahrensschritt kann vorgesehen sein, dass die erste Gehäuseschale 16 auf das Kontaktelement 10 aufgesetzt wird, wie in Figur 5 hinsichtlich des ersten Ausführungsbeispiels, in Figur 18 bezüglich des zweiten Ausführungsbeispiels und in Figur 24 betreffend das dritte Ausführungsbeispiel dargestellt.

Um die Verschiebbarkeit der ersten Gehäuseschale 16 auf dem Kontaktelement 10 bzw. parallel zu der Kontaktfläche 12 des Kontaktelements 10 (in Quer- und Längsrichtung) definiert einzuschränken, kann die erste Gehäuseschale 16 auf ihrer Innenseite ein Anschlagelement 25 aufweisen (vgl. die Figuren 6, 18 und 24 betreffend das jeweilige Ausführungsbeispiel), das sich in dem Vormontagezustand der ersten Gehäuseschale 16 bis in die in dem Kontaktelement 10 gebildete Ausnehmung 14 zwischen den Kontaktschenkeln 11 erstreckt.

In einem nachfolgenden Verfahrensschritt (vgl. Figuren 6, 19 und 25 betreffend das jeweilige Ausführungsbeispiel) kann vorgesehen sein, dass die zweite Gehäuseschale 17 entlang der Montagerichtung M mit der erste Gehäuseschale 16 verbunden wird, bis der Vormontagezustand des Steckverbindergehäuses 15 erreicht ist. Das Kontaktelement 10 ist anschließend zwischen den beiden Gehäuseschalen 16, 17 aufgenommen, wobei die Gehäuseschalen 16, 17 im Wesentlichen verliersicher auf dem Kontaktelement 10 befestigt sind.

In dem zweiten Ausführungsbeispiel verrasten die beiden äußeren Rastmittelpaare der Gehäuseschalen 16, 17, nachdem der Vormontagezustand erreicht wurde, wohingegen das mittlere Rastmittelpaar noch unverrastet ist. Hierdurch kann die Bewegung zwischen den Gehäuseschalen 16, 17 in dem Vormontagezustand eingeschränkt bzw. blockiert werden. Die Verliersicherheit kann dadurch weiter erhöht sein.

Auch in dem dritten Ausführungsbeispiel verrastet das erste Rastmittel 18 der ersten Gehäuseschale 16 in dem Vormontagezustand bereits mit dem zweiten Rastmittel 19 der zweiten Gehäuseschale 17. Gleichzeitig dringt ein sekundäres Rastmittel 18' in eine korrespondierende Rastaufnahme 19' (vgl. Figur 25) der zweiten Gehäuseschale 17 ein, um die relative Position zwischen den beiden Gehäuseschalen 16, 17 in dem Vormontagezustand zu fixieren und eine weitere Verschiebung der Gehäuseschalen 16, 17 aufeinander zu zu blockieren. Hierdurch kann eine Steckverhinderung ausgebildet werden.

In einem anschließenden Verfahrensschritt kann vorgesehen sein, den Gegensteckverbinder 6 in den Steckverbinder 3 einzustecken, bis ein Vorrastzustand erreicht wurde (vgl. Figuren 7 bis 9 betreffend das erste Ausführungsbeispiel, Figuren 21 bis 22 bezüglich des zweiten Ausführungsbeispiels und Figuren 26 bis 28 hinsichtlich des dritten Ausführungsbeispiels).

Es sind im Rahmen der Erfindung verschiedene Möglichkeiten realisierbar, um die Verschiebbarkeit der Gehäuseschalen 16, 17 relativ zueinander zu blockieren oder zumindest einzuschränken, wenn das Gegensteckverbindergehäuse 22 mit dem Steckverbindergehäuse 15 in dem Vorrastzustand verbunden ist. Die drei Ausführungsbeispiele sollen exemplarisch drei Möglichkeiten näher verdeutlichen.

In dem ersten Ausführungsbeispiel weist die zweite Gehäuseschale 17 an zwei sich gegenüberliegenden Seitenwänden jeweils zwei Rücksprünge 26 auf, um korrespondierende Riegelelemente 27 des Gegensteckverbindergehäuses 22 aufzunehmen, wenn das Gegensteckverbindergehäuse 22 in dem Vorrastzustand mit dem Steckverbindergehäuse 15 verbunden ist. Auf diese Weise wird die Verschiebbarkeit der zweiten Gehäuseschale 17 im verbundenen Zustand des Steckverbindergehäuses 15 und des Gegensteckverbindergehäuses 22 zumindest in und entgegen der Montagerichtung M eingeschränkt. Die erste Gehäuseschale 16 ist entsprechend ausgebildet, um in dem Vormontagezustand das Einführen der Riegelelemente 27 in die Rücksprünge 26 zu ermöglichen (vgl. insbesondere Figur 8).

In dem zweiten Ausführungsbeispiel weist die erste Gehäuseschale 16 in ihren Seitenwänden die Rücksprünge 26 für die Riegelelemente 27 des Gegensteckverbindergehäuses 22 auf, wohingegen die zweite Gehäuseschale 17 ausgebildet ist, um das Einführen der Riegelelemente 27 in dem Vormontagezustand zu ermöglichen (vgl. insbesondere Figur 22).

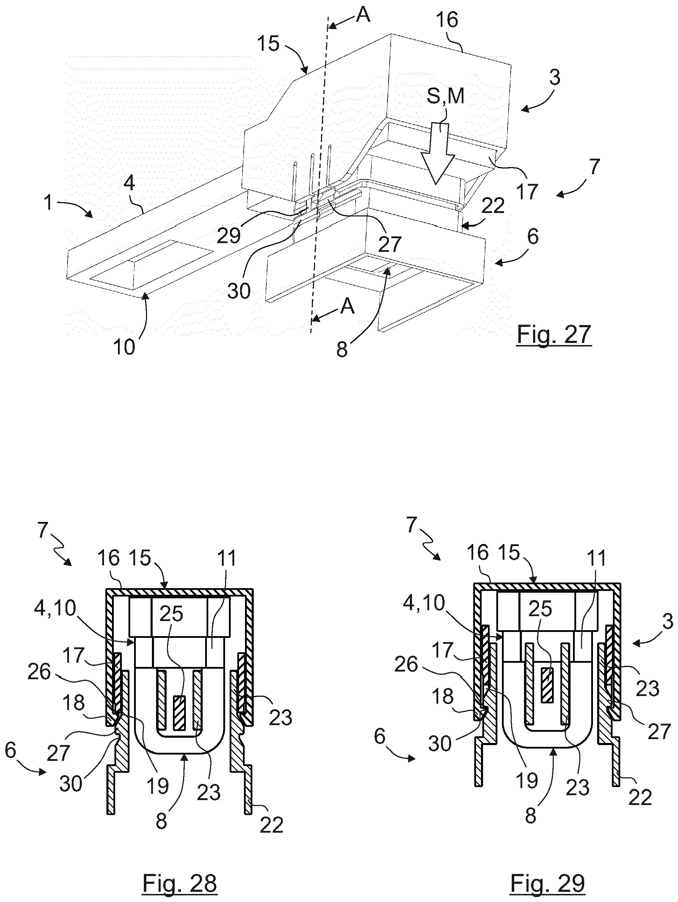

In dem dritten Ausführungsbeispiel weist die erste Gehäuseschale 16 einen Federarm auf, der gleichzeitig das bereits beschriebene erste Rastmittel 18 zur Verrastung der beiden Gehäuseschalen 16, 17 untereinander und gleichzeitig den Rücksprung 26 für ein Riegelelement 27 des Gegensteckverbindergehäuses 22 ausbildet. Der Rücksprung 26 ist dabei hinter einer Kante eines Kopfabschnitts des Federarms ausgebildet. Das Riegelelement 27 weist eine Einführschräge auf und vermag somit während des Zusammenführens des Steckverbindergehäuses 15 und des Gegensteckverbindergehäuses 22 den Federarm nach außen elastisch aufzuspreizen, bis das Riegelelement 27 hinter dem Rücksprung 26 einrastet (das Prinzip ist gut durch Zusammenschau der Figuren 26 bis 29 erkennbar). Dabei verschiebt das Riegelelement 27 gleichzeitig die zweite Gehäuseschale 17 weiter in Richtung erste Gehäuseschale 16, bis das Riegelelement 27 zwischen dem ersten Rastmittel 18 der ersten Gehäuseschale 16 und dem zweiten Rastmittel 19 der zweiten Gehäuseschale 17 zum Erliegen kommt. Die zweite Gehäuseschale 17 ist also anschließend unmittelbar zwischen dem Gegensteckverbindergehäuse 22 und der ersten Gehäuseschale 16 eingeklemmt (vgl. Figur 29). Auf diese Weise kann eine besonders sichere und stabile formschlüssige Verrastung bereitgestellt werden.

Anschließend kann in einem weiteren Verfahrensschritt vorgesehen sein, die beiden Gehäuseschalen 16, 17 in die Verriegelungsposition zu verschieben.

In dem ersten Ausführungsbeispiel (vgl. Figuren 9 und 10) kann hierzu die erste Gehäuseschale 16 entgegen die Montagerichtung M verschoben werden, bis das erste Rastmittel 18 der ersten Gehäuseschale 16 in dem zweiten Rastmittel 19 der zweiten Gehäuseschale 17 verrastet. Die erste Gehäuseschale 16 blockiert in ihrer mit der zweiten Gehäuseschale 17 verrasteten Position den Verschiebeweg der Riegelelemente 27 aus den korrespondierenden Rücksprüngen 26 der zweiten Gehäuseschale 17 entgegen der Steckrichtung S durch Stege bzw. eine Schultern 28, die sich ausgehend von den die Linearführung bereitstellenden umgeschlagenen Seitenwandungen bzw. den Seitenführungen 20 erstreckt. Auf diese Weise kann die gesamte Steckverbindung 7 durch eine einzige, simple Rastverbindung zwischen dem ersten Rastmittel 18 und dem zweiten Rastmittel 19 ausreichend gesichert sein, selbst unter widrigen Einsatzbedingungen.

In dem zweiten Ausführungsbeispiel (vgl. insbesondere die Figuren 22 und 23) wird, um eine Alternative aufzuzeigen, die zweite Gehäuseschale 17 weiter in Montagerichtung M verschoben, bis auch das mittlere der drei Rastmittelpaare der beiden Gehäuseschalen 16, 17 miteinander verrastet. Die beiden ersten Rastmittel 18 der ersten Gehäuseschale 16 haben hierfür ausreichend lineares Spiel innerhalb der die zweiten Rastmittel 19 ausbildenden Langlöcher der zweiten Gehäuseschale 17. Anschließend blockiert die zweite Gehäuseschale 17 den Verschiebeweg der Riegelelemente 27 in den Rücksprüngen 26 der ersten Gehäuseschale 16 mittels Stegen bzw. Schultern 28, vergleichbar mit dem in dem ersten Ausführungsbeispiel bereits erläuterten Prinzip.

In dem dritten Ausführungsbeispiel (vgl. insbesondere Figuren 28 und 29) verrasten die Riegelelemente 27 des Gegensteckverbindergehäuses 22 bereits einzig durch das Einschnappen hinter den Rücksprüngen 26 der die ersten Rastmittel 18 ausbildenden Federarme der ersten Gehäuseschale 16. Während das Gegensteckverbindergehäuse 22 in das Steckverbindergehäuse 15 eindringt, entriegelt ein Freigabekörper 29 (vgl. Figur 26) die Steckverhinderung, indem der Freigabekörper 29 die sekundären Rastmittel 18' der ersten Gehäuseschale 16 elastisch nach außen spreizt und damit aus den Rastaufnahmen 19' der zweiten Gehäuseschalen 17 hebt. Die sekundären Rastmittel 18' rastet anschließend in Außennuten 30 des Gegensteckverbindergehäuses 22 ein und verstärkt damit die Rastverbindung der Steckverbindung 7.

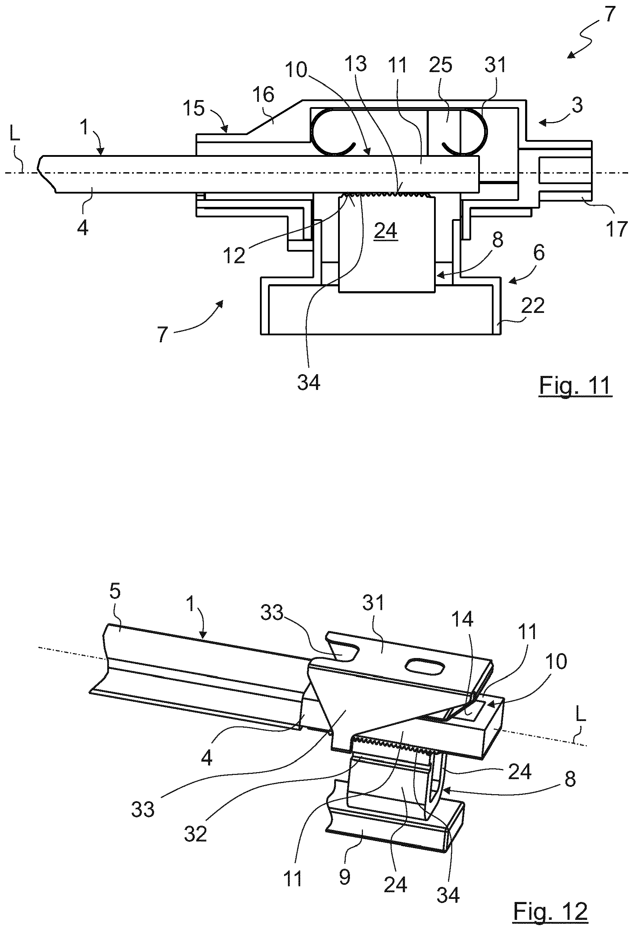

Zur Bereitstellung eines hohen Kontaktdrucks und damit einer guten Kontaktierung kann in allen Ausführungsbeispielen optional wenigstens ein Federelement 31 vorgesehen sein (vgl. Figuren 11, 12, 18 und 24), das ausgebildet ist, um das Kontaktelement 10 mit einer in Richtung auf den Gegensteckverbinder 6 weisenden Federkraft zu beaufschlagen. Das wenigstens eine Federelement 31 ist vorzugsweise zwischen dem Steckverbindergehäuse 15, in den Ausführungsbeispielen zwischen der ersten Gehäuseschale 16 des mehrteiligen Steckverbindergehäuses 15, und dem Kontaktelement 10 angeordnet.

Es kann beispielsweise eine wie in den Figuren 11, 18 und 24 dargestellte Anordnung vorgesehen sein, wonach sich das wenigstens eine Federelement 31 zur Beaufschlagung des Kontaktbereichs 10 mit der Federkraft innenseitig an der ersten Gehäuseschale 16 des Steckverbindergehäuses 15 abstützt. Zur Entlastung des Steckverbindergehäuses 15 kann allerdings auch eine in Figur 12 dargestellte Ausgestaltung des Federelements 31 vorgesehen sein. Dabei kann das Gegenkontaktelement 8 Vorsprünge und/oder Aussparungen 32 aufweisen, die ausgebildet sind, um von dem wenigstens einen Federelement 31 des Steckverbinders 3 hintergriffen zu werden, um das Kontaktelement 10 und das Gegenkontaktelement 8 unmittelbar gegenseitig zu verspannen. Das Federelement 31 kann hierzu zwei Seitenschenkel 33 aufweisen, deren Enden in die Aussparungen 32 des Gegenkontaktelements 8 einführbar sind.

Wie beispielsweise in den Figuren 1, 3, 5 und 14 gut dargestellt und bereits erwähnt, kann das Kontaktelement 10 einen oder mehrere Rücksprünge 26 aufweisen, um das Gegenkontaktelement 8 innerhalb des Rücksprungs 26 zu kontaktieren. Die Ausnehmung 14 kann hierzu beispielsweise stufig ausgebildet sein. Auch eine Ausgestaltung ohne Rücksprung 26 kann allerdings vorgesehen sein (vgl. beispielsweise Figur 13).

Ferner kann vorgesehen sein, dass die Kontaktfläche 12 des Kontaktelements 10 gewölbt und die Stirnfläche 13 des Gegenkontaktelements 8 zu der Wölbung der Kontaktfläche 12 komplementär ausgebildet ist, wie in einigen Ausführungsbeispielen bzw. Varianten dargestellt. Die Kontaktfläche 12 ist vorzugsweise konkav und die Stirnfläche 13 konvex gewölbt. Auf diese Weise kann durch ein Verkippen zwischen Kontaktelement 10 und Gegenkontaktelement 8 auch ein vertikaler Versatz, also ein Versatz in Steckrichtung S ausgeglichen werden. Die Kontaktfläche 12 bzw. Stirnfläche 13 kann allerdings auch eben bzw. plan oder zumindest im Wesentlichen eben ausgebildet sein.

Um die Kontaktierung weiter zu verbessern, kann vorgesehen sein, dass die Kontaktfläche 12 des Kontaktelements 10 und die Stirnfläche 13 des Gegenkontaktelements 8 eine gegenseitige Verzahnung 34 ausbilden, mit Zähnen mit vorzugsweise linearen, spitz zulaufenden Zahnflanken. Die Verzahnung 34 ist auf der Kontaktfläche 12 bzw. auf der Stirnfläche 13 angeordnet bzw. bildet die Kontaktfläche 12 bzw. Stirnfläche 13 aus. Eine Verzahnung 34 ist beispielsweise in den Figuren 13 bis 17 gut dargestellt.

Um einen Versatz zwischen dem Kontaktelement 10 und dem Gegenkontaktelement 8 in möglichst vielen Freiheitsgraden auszugleichen, kann vorgesehen sein, dass die Zähne auf der Kontaktfläche 12 und auf der Stirnfläche 13 jeweils dem Verlauf eines Kreisbogens K folgen, mit vorzugsweise identischen Radien r (vgl. insbesondere die Figuren 15 bis 17). Bereits auf diese Weise kann ein Versatzausgleich in zwei Raumrichtungen möglich sein: entlang der Längsachse L des elektrischen Leiters 4 als auch orthogonal hierzu, also in Querrichtung Q des elektrischen Leiters 4. Der Versatz in Querrichtung Q kann durch ein entsprechendes Verdrehen zwischen Kontaktelement 10 und Gegenkontaktelement 8 entlang des Kreisbogens K ermöglicht werden. Um ergänzend auch noch einen Ausgleich in Steckrichtung S durch ein Verkippen zwischen Kontaktelement 10 und Gegenkontaktelement 8 zu ermöglichen, kann vorgesehen sein, dass die Zähne des Gegenkontaktelements 8 auf einer elliptisch gewölbten Oberfläche des Gegenkontaktelements 8 entlang eines weiteren Kreisbogens K verlaufend angeordnet sind.

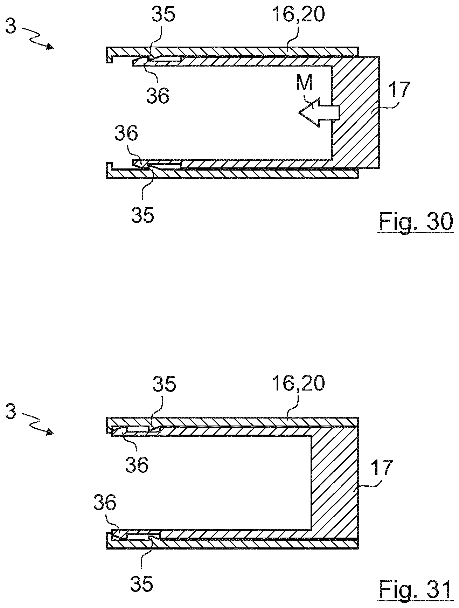

In den Figuren 30 und 31 ist anhand von Prinzipdarstellungen das Funktionsprinzip einer optionalen Verliersicherung dargestellt, die die beiden Gehäuseschalen 16, 17 relativ zueinander und, insofern eine der beiden Gehäuseschalen 16, 17 ein Anschlagelement 25 aufweist (oder auf sonstige Weise mit dem Kontaktelement 10 verbunden ist), auch zu dem Kontaktelement 10 zu sichern vermag. Figur 30 zeigt die beiden Gehäuseschalen 16, 17 in dem Vormontagezustand und Figur 31 in der Verriegelungsposition.

Die erste Gehäuseschale 16 weist zwei erste Rastelemente und die zweite Gehäuseschale 17 weist zwei korrespondierende, zweite Rastelemente auf. Bei dem ersten Rastelement handelt es sich im Ausführungsbeispiel um einen Rastanschlag 35, der beispielsweise innerhalb der die Linearführung ausbildenden Seitenführung 20 angeordnet sein kann. Bei dem zweiten Rastelement handelt es sich im Ausführungsbeispiel um einen korrespondierenden, elastischen Rastarm 36. Der Rastanschlag 35 befindet sich entlang der Montagerichtung M im Verschiebeweg des Rastarms 36. Nach dem Verrasten des Rastarms 36 hinter dem Rastanschlag 35 kann eine weitere Verschiebung des Rastarms bis in die Verriegelungsposition ermöglicht werden; eine Bewegung der zweiten Gehäuseschale 17 entgegen der Montagerichtung M ist hingegen blockiert.

## Patentansprüche

1. Elektrischer Steckverbinder (3) zur elektrischen Verbindung eines in den Steckverbinder (3) mündenden elektrischen Leiters (4) mit einem korrespondierenden elektrischen Gegensteckverbinder (6), aufweisend ein mit dem elektrischen Leiter (4) verbundenes Kontaktelement (10) und ein das Kontaktelement (10) zumindest teilweise umhüllendes Steckverbindergehäuse (15),
**dadurch gekennzeichnet, dass**
eine erste Gehäuseschale (16) des Steckverbindergehäuses (15) und eine zweite Gehäuseschale (17) des Steckverbindergehäuses (15) relativ zueinander bis in eine Verriegelungsposition verschiebbar sind, in der die beiden Gehäuseschalen (16, 17) verriegelt sind und in der zumindest eine der beiden Gehäuseschalen (16, 17) formschlüssig mit einem Gegensteckverbindergehäuse (22) eines Gegensteckverbinders (6) verriegelt ist.

2. Elektrischer Steckverbinder (3) nach Anspruch 1,
**dadurch gekennzeichnet, dass**
das Kontaktelement (10) als ein mit dem elektrischen Leiter (4) einteiliger Kontaktbereich ausgebildet ist, vorzugsweise aus einem plattenförmigen Endabschnitt des elektrischen Leiters (4) ausgeformt ist.

3. Elektrischer Steckverbinder (3) nach Anspruch 1 oder 2,
**dadurch gekennzeichnet, dass**
die zweite Gehäuseschale (17) relativ zu der ersten Gehäuseschale (16) in einer Montagerichtung (M) entlang einer zwischen der ersten Gehäuseschale (16) und der zweiten Gehäuseschale (17) gebildeten Führung, vorzugsweise Linearführung, ausgehend von einem unmontierten Zustand bis in einen Vormontagezustand verschiebbar ist, wobei das Kontaktelement (10) in dem Vormontagezustand zwischen den beiden Gehäuseschalen (16, 17) derart aufgenommen ist, dass eine Kontaktfläche (12) des Kontaktelements (10) für die Kontaktierung mit einer Stirnfläche (13) eines Gegenkontaktelements (8) des Gegensteckverbinders (6) zugänglich ist.

4. Elektrischer Steckverbinder (3) nach Anspruch 3,
**dadurch gekennzeichnet, dass**
die erste Gehäuseschale (16) ein erstes Rastelement (35) und die zweite Gehäuseschale (17) ein zweites Rastelement (36) aufweist, die jeweils angeordnet und ausgebildet sind, um bei Erreichen des Vormontagezustands derart miteinander zu verrasten, dass eine Bewegung der zweiten Gehäuseschale (17) relativ zu der ersten Gehäuseschale (16) nur noch zwischen dem Vormontagezustand und der Verriegelungsposition freigegeben ist.

5. Elektrischer Steckverbinder (3) nach Anspruch 3 oder 4,
**dadurch gekennzeichnet, dass**
die erste Gehäuseschale (16) auf ihrer Innenseite ein Anschlagelement (25) ausbildet, das sich in dem Vormontagezustand der ersten Gehäuseschale (16) bis in eine in dem Kontaktelement (10) gebildete Ausnehmung (14) erstreckt, um die Verschiebbarkeit der ersten Gehäuseschale (16) entlang des Kontaktelements (10) einzuschränken.

6. Elektrischer Steckverbinder (3) nach einem der Ansprüche 1 bis 5,
**dadurch gekennzeichnet, dass**
die beiden Gehäuseschalen (16, 17) in Längsrichtung des Kontaktelements (10) relativ zueinander in die Verriegelungsposition verschiebbar sind.

7. Elektrischer Steckverbinder (3) nach einem der Ansprüche 3 bis 6,
**dadurch gekennzeichnet, dass**
zumindest eine der beiden Gehäuseschalen (16, 17) einen Rücksprung (26) aufweist, um ein korrespondierendes Riegelelement (27) des Gegensteckverbindergehäuses (22) in Bezug auf die Montagerichtung (M) formschlüssig aufzunehmen, wenn das Gegensteckverbindergehäuse (22) in dem Vormontagezustand des Steckverbindergehäuses (15) in einer Steckrichtung (S) mit dem Steckverbindergehäuse (15) verbunden wird.

8. Elektrischer Steckverbinder (3) nach Anspruch 7,
**dadurch gekennzeichnet, dass**
der Verschiebeweg des Riegelelements (27) aus dem Rücksprung (26) entgegen der Steckrichtung (S) formschlüssig blockiert ist, wenn sich die beiden Gehäuseschalen (16, 17) in der Verriegelungsposition befinden, und freigegeben ist, wenn sich die beiden Gehäuseschalen (16, 17) in dem Vormontagezustand befindet.

9. Elektrischer Steckverbinder (3) nach Anspruch 8,
**dadurch gekennzeichnet, dass**
der Verschiebeweg des Riegelelements (27) aus dem Rücksprung (26) entgegen der Steckrichtung (S) blockiert ist, wenn sich die beiden Gehäuseschalen (16, 17) in der Verriegelungsposition befinden, indem
a) der das Riegelelement (27) aufnehmende Rücksprung (26) einer der Gehäuseschalen (16, 17) durch einen Vorsprung (28) der anderen Gehäuseschale (17, 16) verschlossen ist; und/oder
b) ein den Rücksprung (26) ausbildendes Gehäuseelement einer der Gehäuseschalen (16, 17) hinter dem Riegelelement (27) eingerastet ist.

10. Elektrischer Steckverbinder (3) nach einem der Ansprüche 1 bis 9,
**dadurch gekennzeichnet, dass**
die erste Gehäuseschale (16) ein erstes Rastmittel (18) und die zweite Gehäuseschale (17) ein mit dem ersten Rastmittel (18) korrespondierendes, zweites Rastmittel (19) aufweist, um die beiden Gehäuseschalen (16, 17) formschlüssig relativ zueinander zu fixieren, nachdem die beiden Gehäuseschalen (16, 17) die gegenseitige Verriegelungsposition erreicht haben.

11. Elektrischer Steckverbinder (3) nach einem der Ansprüche 1 bis 10,
**gekennzeichnet durch**
wenigstens ein Federelement (31), das ausgebildet ist, um das Kontaktelement (10) mit einer in Richtung auf den Gegensteckverbinder (6) weisende Federkraft zu beaufschlagen.

12. Elektrischer Steckverbinder (3) nach einem der Ansprüche 1 bis 11,
**dadurch gekennzeichnet, dass**
das Kontaktelement (10) zur Verwendung in der Hochvolttechnik ausgebildet ist, vorzugsweise zur Übertragung elektrischer Ströme von über 10 Ampere.

13. Elektrisches Verbindungselement (1), aufweisend wenigstens einen elektrischen Steckverbinder (3) gemäß einem der Ansprüche 1 bis 12 und den elektrischen Leiter (4), wobei an zumindest einem Ende des elektrischen Leiters (4) einer der Steckverbinder (3) angeordnet ist, wobei der elektrische Leiter (4) vorzugsweise als Stromschiene ausgebildet ist.

14. Elektrische Steckverbindung (7), aufweisend einen elektrischen Steckverbinder (3) gemäß einem der Ansprüche 1 bis 12 und den elektrischen Gegensteckverbinder (6), wobei der Gegensteckverbinder (6) mit einer elektrischen Einrichtung (2) verbunden ist, um im verbundenen Zustand der Steckverbindung (7) eine elektrische Verbindung zwischen dem elektrischen Leiter (4) und der elektrischen Einrichtung (2) herzustellen.

15. Elektrische Steckverbindung (7) nach Anspruch 14,
**dadurch gekennzeichnet, dass**
das Gegensteckverbindergehäuse (22) wenigstens ein Berührschutzelement (23) aufweist, um einen Berührschutz für das Gegenkontaktelement (8) bereitzustellen, vorzugsweise wenigstens zwei das Gegenkontaktelement (8) umgebende, sich in Steckrichtung (S) erstreckende, plattenförmige Berührschutzelemente (23).
